# EUROPÄISCHE PATENTSCHRIFT

(11) **EP 3 683 599 B1**
(45) Veröffentlichungstag und Bekanntmachung des Hinweises auf die Patenterteilung: **22.06.2022**
(21) Anmeldenummer: 19152055.0
(22) Anmeldetag: 16.01.2019
(51) Int. Cl.: G01S 17/10, G01S 7/487, G01S 7/486, G01S 7/4863

(54) **VERFAHREN UND VORRICHTUNG ZUR OPTISCHEN ABSTANDSMESSUNG**
METHOD AND DEVICE FOR OPTICALLY MEASURING DISTANCES
PROCÉDÉ ET DISPOSITIF DE MESURE DE DISTANCE OPTIQUE

(43) Veröffentlichungstag der Anmeldung: 22.07.2020
(73) Patentinhaber: Ibeo Automotive Systems GmbH, 22143 Hamburg (DE)
(72) Erfinder: Birnbacher, Wolfgang, 22143 Hamburg (DE)
(74) Vertreter: RGTH

(56) Entgegenhaltungen:
- EP-A1- 3 418 767
- DE-A1-102017 208 704
- NICLASS CRISTIANO ET AL: "A 0.18-$\mu$ m CMOS SoC for a 100-m-Range 10-Frame/s 200 $\,\times\,$96-Pixel Time-of-Flight Depth Sensor", IEEE JOURNAL OF SOLID-STATE CIRCUITS, IEEE SERVICE CENTER, PISCATAWAY, NJ, USA, Bd. 49, Nr. 1, 1. Januar 2014 (2014-01-01) , Seiten 315-330, XP011534932, ISSN: 0018-9200, DOI: 10.1109/JSSC.2013.2284352 [gefunden am 2013-12-20]

## Beschreibung

Die vorliegende Erfindung betrifft ein Verfahren zu optischen Abstandsmessung, insbesondere mittels zeitkorrelierter Einzelphotonenzählung, wobei mehrere optische Messpulse von mindestens einem Sender ausgesendet werden, wobei die optischen Messpulse an einem Objekt reflektiert werden, wobei Photonen der reflektierten optischen Messpulse von mindestens einem Empfänger detektiert werden, wobei eine erste Verteilung von Lichtlaufzeiten der detektierten Photonen ermittelt wird, wobei die erste Verteilung der Lichtlaufzeiten in einem ersten Speicherbereich einer Speichereinheit abgespeichert wird, und wobei die erste Verteilung von Lichtlaufzeiten Zeitintervallen einer ersten Vielzahl Zeitintervalle zugeordnet wird.

Ferner betrifft die vorliegende Erfindung eine Vorrichtung zur optischen Abstandsmessung, insbesondere mittels zeitkorrelierter Einzelphotonenzählung.

### Technologischer Hintergrund

Optische Abstandsmessungen, insbesondere zur Anwendung in der fahrerlosen Navigation von Fahrzeugen, beruhen auf dem Time-of-Flight-Prinzip. Meistens wird ein scannender Sensor, bevorzugt ein LIDAR-Sensor (Abkürzung "Light Detection and Ranging"), verwendet, der periodisch Messpulse aussendet. Die Messpulse werden von Objekten reflektiert und Photonen der reflektierten Messpulse werden detektiert. Aus der gemessenen Verteilung der Laufzeiten der detektierten Photonen der Messpulse von dem Sender zu den Objekten und zurück zu dem Empfänger kann mittels der Lichtgeschwindigkeit auf die Distanz zu den Objekten geschlossen werden.

Aus dem Artikel Niclass et al.: "A 0.18-µm CMOS SoC for a 100-m-Range 10-Frame/s 200 x 96-Pixel Time-of-Flight Depth Sensor", IEEE Journal of solid-state circuits, Bd. 49, Nr. 1, Seiten 315-330, ist ein SoC für zeitkorrelierte Einzelphotonzählung und ToF-Messungen bekannt.

Aus der EP 3 168 641 A1 der Anmelderin sind ein Verfahren und eine Vorrichtung zur optischen Abstandsmessung bekannt. Bei dem Verfahren wird eine Sendermatrix zum Aussenden von Messpulsen und eine Empfangsmatrix zum Empfangen der Messpulse verwendet, wobei nur Untermengen von Sendern der Sendermatrix aktiviert werden.

Bei Verfahren zur optischen Abstandsmessung mittels zeitkorrelierter Einzelphotonenzählung (Abkürzung: TCSPC-Abstandsmessung) wird für den vollen Distanzbereich ein Histogrammspeicher benötigt, welcher in vielen Integrationsdurchläufen mit Events detektierter Photonen gefüllt wird. Ein Event ist dabei die gemessene Lichtlaufzeit eines der detektierten Photonen. Nach Beendigung des Integrationszyklus müssen die Daten aus dem Histogrammspeicher zur weiteren Verarbeitung und Auswertung an eine Datenverarbeitungseinheit übertragen werden. Während der Übertragung kann der Histogrammspeicher nicht für weitere Integrationsdurchläufe verwendet werden. Da die Abstandsmessung somit für die Dauer der Übertragung pausiert werden muss, ergibt sich ein erheblicher Verlust von Integrationszyklen und daraus folgend eine stark verschlechterte Qualität der Abstandsmessung.

Aus dem Stand der Technik sind sogenannte Ping-Pong-Speicher bekannt, um die Abstandsmessung auch während der Dauer der Übertragung fortzuführen. Ein Ping-Pong-Speicher umfasst zwei Speicherbereiche A und B gleicher Größe, wobei zunächst in einem ersten Integrationsdurchlauf der erste Speicher A mit Daten bzw. Events gefüllt wird. Während der Übertragung der Daten aus dem Speicher A an die Datenverarbeitungseinheit wird der zweite Speicher B mit Daten gefüllt. Die Verwendung eines Ping-Pong-Speichers bedingt daher eine Verdopplung des Speicherbedarfs. Dies ist insbesondere bei einer ASIC-Integration (Application Specific Integrated Circuit) von Nachteil, da der notwendige zusätzliche Speicher viel Chipfläche und Leistung benötigt.

Ein weiteres Problem bei aus dem Stand der Technik bekannten Verfahren zur optischen Abstandsmessung besteht darin, dass bei einer hohen Abtastfrequenz und/oder einer hohen Auflösung der Abstandsmessung große Datenmengen anfallen, welche in sehr kurzen Zeitintervallen übertragen und ausgewertet werden müssen. Die damit verbunden hohen Datenübertragungsraten sind nur aufwendig und kostspielig bereitstellbar. Alternativ müssen die Abtastfrequenz und die Auflösung der Abstandsmessung reduziert werden.

### Darstellung der Erfindung, Aufgabe, Lösung, Vorteile

Der vorliegenden Erfindung liegt die Aufgabe zugrunde, ein Verfahren und eine Vorrichtung zur optischen Abstandsmessung, insbesondere mittels zeitkorrelierter Einzelphotonenzählung, bereitzustellen, wobei der Speicherbedarf und der Verlust von Integrationszyklen verringert wird. Ferner soll die Genauigkeit der Abstandsmessung verbessert werden.

Zur Lösung der der Erfindung zugrundeliegenden Aufgabe wird ein Verfahren zur optischen Abstandsmessung, insbesondere mittels zeitkorrelierter Einzelphotonenzählung, vorgeschlagen, wobei mehrere optische Messpulse von mindestens einem Sender ausgesendet werden, wobei die optischen Messpulse an einem Objekt reflektiert werden, wobei Photonen der reflektierten optischen Messpulse von mindestens einem Empfänger detektiert werden, wobei eine erste Verteilung von Lichtlaufzeiten der detektierten Photonen ermittelt wird, wobei die erste Verteilung von Lichtlaufzeiten in einem ersten Speicherbereich einer Speichereinheit abgespeichert wird, wobei die erste Verteilung von Lichtlaufzeiten Zeitintervallen einer ersten Vielzahl Zeitintervalle zugeordnet wird, wobei in einem Reduktionsschritt Frequenzanteile der ersten Verteilung der Lichtlaufzeiten oberhalb einer vorbestimmten Grenzfrequenz mittels eines Tiefpassfilters reduziert oder unterdrückt werden, sodass eine zweite Verteilung von Lichtlaufzeiten erzeugt wird, wobei die zweite Verteilung von Lichtlaufzeiten Zeitintervallen einer zweiten Vielzahl Zeitintervalle zugeordnet wird, und wobei eine Sperrfrequenz des Tiefpassfilters kleiner oder gleich der Hälfte des Kehrwerts einer kleinsten Intervallbreite der zweiten Vielzahl Zeitintervalle gewählt wird.

Der Sender ist insbesondere ein optischer Sender und kann als Oberflächenemitter oder VCSEL (Vertical Cavity Surface Emitting Laser) ausgebildet sein. Der Empfänger kann als SPAD (Single Photon Avalanche Diode; Einzelphotonenavalanchediode) ausgebildet sein.

Durch die erfindungsgemäße Wahl der Sperrfrequenz wird bevorzugt das Nyquist-Theorem erfüllt, um Alias-Effekten entgegenzuwirken.

Die Zuordnung der Verteilung von Lichtlaufzeiten zu Zeitintervallen einer ersten oder einer zweiten Vielzahl von Zeitintervallen entspricht einer Histogrammierung der Verteilung von Lichtlaufzeiten. Die Zuordnung kann auch durch das Abspeichern der ersten Verteilung von Lichtlaufzeiten und/oder der zweiten Verteilung von Lichtlaufzeiten in Datenstrukturen, wobei die entsprechende Datenstruktur bevorzugt ein Histogramm bzw. eine ein Histogramm abbildende Datenstruktur, wie beispielsweise eine Liste oder ein Array, ist, erfolgen. Im Folgenden werden die Zeitintervallen einer ersten oder einer zweiten Vielzahl von Zeitintervallen zugeordneten erste oder zweite Verteilung von Lichtlaufzeiten auch als Histogrammierung, Histogramm oder Binning bezeichnet. Diese Begriffe können im Sinne der vorliegenden Erfindung als äquivalent betrachtet und benutzt werden.

Die Pulsdauer der Messpulse kann geeignet gewählt werden. Insbesondere können die Messpulse kürzer als 100 ns, bevorzugt kürzer als 50 ns, besonders bevorzugt kürzer als 20 ns, weiter bevorzugt kürzer als 10 ns, ganz besonders bevorzugt kürzer oder gleich 5 ns, noch weiter insbesondere bevorzugt ca. 1 ns, lang sein.

Weiter bevorzugt kann vorgesehen sein, dass die Messpulse eine Anstieg- und/oder Abfallzeit von weniger als 5 ns, weiter bevorzugt von weniger als 2 ns, insbesondere bevorzugt von weniger oder gleich 1 ns, weiter insbesondere bevorzugt von weniger oder gleich 0,5 ns, noch weiter bevorzugt von weniger oder gleich 0,2 ns, ganz besonders bevorzugt von weniger oder gleich 0,1 ns, aufweisen.

Photonen der an einem Objekt reflektierten optischen Messpulse werden von dem mindestens einen Empfänger detektiert. Für jedes detektierte Photon kann eine Lichtlaufzeit beginnend mit einem Zeitpunkt der Aussendung des entsprechenden Messpulses bis zur Detektion des Photons durch den Empfänger bestimmt werden. Wird eine Vielzahl von optischen Messpulsen ausgesendet und entsprechend eine Vielzahl von Photonen der ausgesendeten Messpulse empfangen, kann eine erste Verteilung von Lichtlaufzeiten der detektierten Photonen ermittelt werden.

Bevorzugt wird die erste Verteilung von Lichtlaufzeiten in mehreren Integrationsdurchläufen ermittelt und in dem ersten Speicherbereich der Speichereinheit abgespeichert.

Die erste Verteilung von Lichtlaufzeiten kann in einer Datenstruktur abgespeichert werden. Die Datenstruktur ist bevorzugt ein Histogramm bzw. eine ein Histogramm abbildende Datenstruktur, wie beispielsweise eine Liste oder ein Array.

Die so bestimmte erste Verteilung der Lichtlaufzeiten kann statistische Fluktuationen und Rauschsignale aufweisen, welche jedoch keine Distanz-, Abstands- oder Entfernungsinformationen beinhalten.

Da es technisch unmöglich ist, einen perfekten Dirac-Impuls von einem Sender, beispielsweise von einem VCSEL-Sender, auszusenden, hat ein Messpuls immer eine Mindestdauer. Diese Mindestdauer kann durch die Messstrecke verlängert, aber nicht verkürzt werden. So hat beispielsweise ein von dem Sender ausgesendeter, vorzugsweise gepulster, Laserstrahl einen endlichen Querschnitt senkrecht zur Ausbreitungsrichtung. Trifft der Messpuls bzw. der Laserstrahl auf ein schrägstehendes Objekt, wird der Reflektionsbereich in Ausbreitungsrichtung vergrößert und dadurch die erste Verteilung der Lichtlaufzeiten bezüglich der detektierten Messpulsdauer gestreckt. Ferner ergibt sich eine Verbreiterung der ersten Verteilung der Lichtlaufzeiten durch den Dopplereffekt bei einer Relativgeschwindigkeit von Sender und/oder Empfänger zum Objekt. Hinzu kommt, dass ein Sender wie ein Laser, beispielsweise eine Laserdiode oder VCSEL-Laser, eine gewisse Anstiegs- und Abfallzeit aufweist, welche üblicherweise in der Größenordnung von 0,1 ns bis 5 ns liegt. Aufgrund dieser Zusammenhänge kann davon ausgegangen werden, dass es eine Grenzfrequenz entsprechend dem Kehrwert eines kleinsten Zeitintervalls gibt, oberhalb derer keine Entfernungsinformationen des Messpulses mehr vorhanden sind.

Die statistischen Fluktuationen oder Rauschsignale in der ersten Verteilung der Lichtlaufzeiten können, beispielsweise im Rahmen einer Fourier-Zerlegung, als Frequenzanteile der ersten Verteilung von Lichtlaufzeiten aufgefasst werden. Durch die Durchführung des Reduktionsschrittes, wobei Frequenzanteile der ersten Verteilung von Lichtlaufzeiten oberhalb einer vorbestimmten Grenzfrequenz mittels eines Tiefpassfilters reduziert oder unterdrückt werden, sodass eine zweite Verteilung von Lichtlaufzeiten erzeugt wird, können diese Frequenzanteile, insbesondere die statistischen Fluktuationen oder die Rauschsignale, reduziert oder unterdrückt werden, ohne dass Entfernungsinformationen für die Abstandsmessung verloren gehen. Hierdurch kann eine Reduktion der Datenmenge erreicht werden, ohne dass die Qualität der Abstandsmessung wesentlich verschlechtert wird.

Die erhaltene zweite Verteilung von Lichtlaufzeiten kann weniger Speicherbedarf benötigen, sodass insbesondere auf die Verwendung eines Ping-Pong-Speichers verzichtet werden kann. Ein weiterer Vorteil des verringerten Speicherbedarfs ist, dass die Zeit für die Datenübertragung, während der die Abstandsmessung pausiert werden muss, reduziert werden kann.

Der Tiefpassfilter kann auch als Bandpassfilter ausgebildet sein. Ein Bandpassfilter lässt nur Signale eines bestimmten Frequenzbands oder Durchlassbereiches passieren. Die Frequenzbereiche unterhalb und oberhalb des Durchlassbereiches werden dabei gesperrt oder deutlich abgeschwächt. Entsprechend wirkt ein Bandpassfilter bezüglich der Frequenzbereiche oberhalb des Durchlassbereiches wie ein Tiefpassfilter.

Bevorzugt kann vorgesehen sein, dass die zweite Verteilung von Lichtlaufzeiten in einem zweiten Speicherbereich der Speichereinheit abgespeichert wird, wobei weiter bevorzugt der zweite Speicherbereich kleiner ist als der erste Speicherbereich.

Die zweite Verteilung von Lichtlaufzeiten kann ebenfalls in einer Datenstruktur abgespeichert werden. Die Datenstruktur ist bevorzugt ein Histogramm bzw. eine ein Histogramm abbildende Datenstruktur, wie beispielsweise eine Liste oder ein Array.

Durch die Durchführung des Reduktionsschrittes, in dem Frequenzanteile der ersten Verteilung von Lichtlaufzeiten oberhalb einer vorbestimmten Grenzfrequenz mittels eines Tiefpassfilters reduziert oder unterdrückt werden, kann die erste Verteilung von Lichtlaufzeiten geglättet werden, sodass die zweite Verteilung von Lichtlaufzeiten einen glatteren Verlauf aufweist. Insbesondere können statistische Fluktuationen und Rauschsignale herausgefiltert bzw. reduziert werden.

Entsprechend werden bei einer Histogrammdarstellung der zweiten Verteilung von Lichtlaufzeiten weniger Zeitintervalle bzw. Bins benötigt. Für die Datenstruktur zur Speicherung der zweiten Verteilung von Lichtlaufzeiten bedeutet dies, dass der für diese benötigte Speicherbedarf reduziert werden kann. Entsprechend kann der zweite Speicherbereich kleiner als der erste Speicherbereich gewählt werden. Durch die Verwendung eines kleineren zweiten Speicherbereichs zum Abspeichern der zweiten Verteilung von Lichtlaufzeiten wird somit der gesamte Speicherbedarf verringert, sodass die Nachteile der Verwendung eines Ping-Pong-Speichers überwunden werden, ohne dass es zu einer Verschlechterung des Messergebnisses kommt. Ferner bedarf die Übertragung der geglätteten oder Verteilung der Lichtlaufzeiten in den zweiten Speicherbereich und/oder aus dem zweiten Speicherbereich heraus weniger Zeit, sodass die Abstandsmessung gegenüber Verfahren aus dem Stand der Technik für einen kürzeren Zeitraum unterbrochen oder pausiert werden muss.

Bevorzugt ist der zweite Speicherbereich um mindestens 25%, weiter bevorzugt um mindestens 50%, insbesondere bevorzugt um mindestens 75%, weiter insbesondere bevorzugt um mindestens 87,5%, kleiner als der erste Speicherbereich.

Bevorzugt ist der zweite Speicherbereich um einen Dezimationsfaktor von mindestens 1,33, weiter bevorzugt von mindestens 2, insbesondere bevorzugt von mindestens 4, weiter insbesondere bevorzugt von mindestens 8, kleiner als der erste Speicherbereich.

Bei der Erzeugung der zweiten Verteilung von Lichtlaufzeiten in dem Reduktionsschritt geht keine Nutzinformation für die Abstandsmessung verloren, weshalb auch von einer verlustfreien Kompression gesprochen werden kann.

Ferner kann vorgesehen sein, dass während der Durchführung des Reduktionsschritts keine optischen Messpulse ausgesendet und/oder detektiert werden.

Durch diese Maßnahme kann der Energiebedarf und die benötigte Rechenleistung einer Vorrichtung zur Durchführung des Verfahrens reduziert werden.

Bevorzugt kann vorgesehen sein, dass während des Reduktionsschritts und/oder des Abspeicherns der zweiten Verteilung von Lichtlaufzeiten in dem zweiten Speicherbereich keine optischen Messpulse von dem mindestens einen Sender ausgesendet werden und/oder keine erste Verteilung von Lichtlaufzeiten ermittelt wird und/oder keine erste Verteilung von Lichtlaufzeiten in dem ersten Speicherbereich abgespeichert wird.

Mit anderen Worten kann während des Reduktionsschrittes und/oder während des Abspeicherns der zweiten Verteilung von Lichtlaufzeiten in dem zweiten Speicherbereich die Datenaufnahme kurzfristig unterbrochen werden. Dies hat den Vorteil, dass kein zusätzlicher Speicherbereich benötigt wird, in dem während des Reduktionsschritts und/oder Abspeicherns der zweiten Verteilung von Lichtlaufzeiten in dem zweiten Speicherbereich eine weitere erste Verteilung von Lichtlaufzeiten zwischengespeichert werden muss. Insbesondere muss das Auslesen der ersten Verteilung von Lichtlaufzeiten aus dem ersten Speicherbereich zwecks Reduzierung und Speichern der reduzierten, zweiten Verteilung von Lichtlaufzeiten in den zweiten Speicherbereich nicht für Schreibvorgänge einer weiteren ersten Verteilung von Lichtlaufzeiten in den ersten Speicherbereich unterbrochen werden.

Zudem kann vorgesehen sein, dass die zweite Verteilung von Lichtlaufzeiten aus dem zweiten Speicherbereich ausgelesen wird, wobei während des Auslesens des zweiten Speicherbereichs optische Messpulse von dem mindestens einen Sender ausgesendet werden und/oder eine, insbesondere weitere, erste Verteilung von Lichtlaufzeiten von detektierten Photonen ermittelt wird und/oder eine, insbesondere weitere, erste Verteilung von Lichtlaufzeiten in dem ersten Speicherbereich der Speichereinheit abgespeichert wird, wobei die, insbesondere weitere, erste Verteilung von Lichtlaufzeiten Zeitintervallen der ersten Vielzahl Zeitintervalle zugeordnet wird.

Die zweite Verteilung von Lichtlaufzeiten kann aus dem zweiten Speicherbereich ausgelesen werden, und zur weiteren Verarbeitung an eine Recheneinheit oder Datenverarbeitungseinheit gesendet werden. Beispielsweise kann die Recheneinheit oder Datenverarbeitungseinheit aus der zweiten Verteilung von Lichtlaufzeiten eine mittlere Lichtlaufzeit bestimmen und daraus unter Zuhilfenahme des Wertes der Lichtgeschwindigkeit eine Entfernung zu dem Objekt, an dem die optischen Messpulse reflektiert wurden, bestimmen.

Parallel zum Auslesen der zweiten Verteilung von Lichtlaufzeiten kann in einem weiteren Zyklus des Verfahrens eine weitere erste Verteilung von Lichtlaufzeiten ermittelt werden. Der sich daraus ergebende Vorteil besteht darin, dass die Datenaufnahme nicht für das Auslesen der zweiten Verteilung von Lichtlaufzeiten und der Bestimmung der Objektentfernung unterbrochen werden muss. Da die reduzierte zweite Verteilung von Lichtlaufzeiten weniger Speicherbedarf benötigt als die erste Verteilung von Lichtlaufzeiten kann der zweite Speicherbereich wesentlich kleiner als der erste Speicherbereich sein. Insbesondere wird der Speicherbedarf gegenüber einem Ping-Pong-Speicher reduziert. Zudem wird für das Auslesen der zweiten Verteilung aus dem zweiten Speicherbereich weniger Zeit benötigt, so dass die benötigten Datenverarbeitungsressourcen verringert werden und für andere Aufgaben, wie beispielsweise die Datenaufnahme, eingesetzt werden können.

Weiter bevorzugt kann vorgesehen sein, dass die zweite Vielzahl Zeitintervalle weniger Zeitintervalle umfasst als die erste Vielzahl Zeitintervalle.

Die Kombination von Reduktionsschritt und Histogrammierung mit Reduzierung der Anzahl von Zeitintervallen kann auch als Dezimierung oder Abtastratenkonvertierung beziehungsweise "Downsampling" bezeichnet werden.

Besonders bevorzugt werden somit Dezimierungsverfahren, Verfahren zur Abtastratenkonvertierung beziehungsweise Downsamplingverfahren auf die erste Verteilung von Lichtlaufzeiten, insbesondere auf die histogrammierte erste Verteilung von Lichtlaufzeiten, das heißt auf die in einer entsprechenden Datenstruktur gespeicherte erste Verteilung von Lichtlaufzeiten, angewendet.

Durch die Anwendung von Dezimierungsverfahren und/oder Downsamplingverfahren kann der Speicherbedarf für den zweiten Speicherbereich reduziert werden, ohne dass die Qualität der Abstandsmessung verschlechtert wird.

Die Dezimierung oder Abtastratenkonvertierung hat gegenüber einer von vornherein reduzierten Entfernungsauflösung, das heißt einer Vergrößerung der Zeitintervalle der ersten Vielzahl von Zeitintervallen, den Vorteil, dass ein größerer Anteil des gleich verteilten Rauschens durch die Dezimierung in der ersten Verteilung der Lichtlaufzeiten eliminiert bzw. reduziert wird.

Dadurch, dass die zweite Vielzahl von Zeitintervallen weniger Zeitintervalle umfasst als die erste Vielzahl von Zeitintervallen, wird ferner ein geringerer Speicherbedarf im zweiten Speicherbereich für die entsprechende Datenstruktur benötigt, sodass eine, insbesondere verlustfreie, Kompression der Verteilung von Lichtlaufzeiten ermöglicht wird.

Diesem Vorteil liegt die Erkenntnis zugrunde, dass die erste Verteilung von Lichtlaufzeiten als nachrichtentechnisches Signal interpretiert werden kann, auf welches nachrichtentechnische Mittel und Methoden angewendet werden können. Diese überraschende Erkenntnis ist im Bereich von Verfahren zur optischen Abstandsmessung, insbesondere mittels zeitkorrelierter Einzelphotonenzählung, aus dem Stand der Technik nicht bekannt.

Weiter bevorzugt kann vorgesehen sein, dass die Lichtlaufzeiten der detektierten Photonen mit einem Zeitpunkt der Aussendung des jeweiligen optischen Messpulses korreliert werden.

Durch die Korrelation entspricht die Lichtlaufzeit der detektierten Photonen der Summe der Distanzen von dem Sender zu dem Objekt und von dem Objekt zu dem Empfänger, dividiert durch die Lichtgeschwindigkeit.

Weiter bevorzugt kann vorgesehen sein, dass die Zeitintervalle der ersten Vielzahl Zeitintervalle und/oder der zweiten Vielzahl Zeitintervalle unterschiedlich groß sind.

Dementsprechend kann die erste Vielzahl von Zeitintervallen Zeitintervalle einer ersten Intervallbreite entsprechend einer ersten Distanzauflösung und Zeitintervalle einer zweiten Intervallbreite entsprechend einer zweiten Distanzauflösung aufweisen. Beispielsweise können für eine Nahfeldauflösung Zeitintervalle entsprechend einer 4 cm Auflösung gewählt werden, während für eine Mittel- und Fernfeldauflösung Zeitintervalle entsprechend einer Distanzauflösung von 8 cm gewählt werden können.

Ebenso kann die zweite Vielzahl von Zeitintervallen Zeitintervalle einer ersten Intervallbreite entsprechend einer ersten Distanzauflösung und Zeitintervalle einer zweiten Intervallbreite entsprechend einer zweiten Distanzauflösung aufweisen.

Da insbesondere im Fern- oder Mittelfeld eine sehr hohe Auflösung nicht notwendig ist, kann der Speicherbedarf durch die entsprechenden unterschiedlich gewählten Intervallbreiten weiter reduziert werden.

Insbesondere können die einzelnen Zeitintervalle im ersten Speicherbereich und im zweiten Speicherbereich über ein Adress-LSB (Least Significant Bit) der entsprechenden Datenstruktur angesprochen werden.

Ein Adress-LSB entspricht bevorzugt einem Distanzschritt auf der höheren Auflösung. Eine Distanzreduktion um den Faktor 2 kann zum Beispiel durch Ignorieren des Adress-LSB erreicht werden.

Bevorzugt wird der Reduktionsschritt nur für einen Teilbereich der ersten Verteilung von Lichtlaufzeiten und/oder der ersten Vielzahl Zeitintervalle durchgeführt wird, und/oder für verschiedene Teilbereiche der ersten Verteilung von Lichtlaufzeiten und/oder der ersten Vielzahl Zeitintervalle werden unterschiedliche Sperrfrequenzen gewählt.

Beispielsweise ist es möglich, dass für die erste Vielzahl von Zeitintervallen Zeitintervalle einer ersten Intervallbreite entsprechend einer ersten Distanzauflösung, insbesondere entsprechend einer Nahfeldauflösung, und Zeitintervalle einer zweiten Intervallbreite entsprechend einer zweiten Distanzauflösung, insbesondere entsprechend einer Mittel- und/oder Fernfeldauflösung, vorgesehen sind, und dass für die Zeitintervalle der ersten Intervallbreite eine höhere Grenzfrequenz gewählt wird als für die Zeitintervalle der zweiten Intervallbreite. Dadurch wird insbesondere für das Fernfeld nach dem Reduzierungsschritt der Speicherbedarf verringert. Die Wahl unterschiedlicher Grenzfrequenzen ist auch möglich, wenn alle Zeitintervalle der ersten Vielzahl von Zeitintervallen die gleiche Intervallbreite aufweisen. Wird für die Mittel- und/oder Fernfeldauflösung eine niedrigere Grenzfrequenz gewählt, so wird der Speicherbedarf der zweiten Verteilung von Zeitintervallen verringert. Grundsätzlich ist es auch möglich, durch Wahl der Grenzfrequenzen für das Nahfeld und das Mittel- oder Fernfeld so zu wählen, dass die zweite Verteilung von Lichtlaufzeiten über den gesamten Detektionsbereich aus Nah-, Mittel- und Fernfeld eine einheitliche Distanzauflösung aufweist.

Besonders bevorzugt ist vorgesehen, dass die vorbestimmte Grenzfrequenz als Grenzfrequenz des Tiefpassfilters gewählt wird und durch eine Pulsbreite und/oder eine Pulsanstiegszeit der optischen Messpulse festgelegt wird.

Durch die Festlegung der Grenzfrequenz durch die Pulsanstiegszeit und/oder die Pulsbreite kann die erste Verteilung von Lichtlaufzeiten beziehungsweise das daraus ermittelte Histogramm oder die entsprechende Datenstruktur derart reduziert und/oder dezimiert werden, dass nur der spektrale Anteil, welcher Pulsenergie beziehungsweise Entfernungsinformationen für die Abstandsmessung beinhaltet, in Form der zweiten Verteilung von Lichtlaufzeiten abgespeichert und ausgewertet werden muss.

Die Grenzfrequenz des Tiefpassfilters kann ferner so gewählt werden, dass diese der höchsten Entfernungsinformationen tragenden Frequenz im Messpuls beziehungsweise in der ersten Verteilung der Lichtlaufzeiten entspricht.

Ferner kann vorgesehen sein, dass die Grenzfrequenz einer Frequenz einer Fourier-Zerlegung der ersten Verteilung der Lichtlaufzeiten entspricht, wobei bevorzugt Frequenzen oberhalb der Grenzfrequenz weniger als 20 %, weiter bevorzugt weniger als 10 %, besonders bevorzugt weniger als 5 %, ganz besonders bevorzugt weniger als 1 %, zu der ersten Verteilung der Lichtlaufzeiten beitragen.

Die erste und/oder die zweite Verteilung der Lichtlaufzeiten, beziehungsweise die daraus ermittelten Histogramme oder Datenstrukturen, können als nachrichtentechnische Signale aufgefasst werden, welche durch eine Fourier-Zerlegung im Frequenzraum analysiert werden können. Dabei tragen nur Frequenzanteile Entfernungsinformationen für die Abstandsmessung, welche unterhalb einer Grenzfrequenz, welche beispielsweise durch die Anstiegszeit oder durch die Pulsbreite festgelegt ist, liegen.

Gleichzeitig oder alternativ kann die Grenzfrequenz nicht nur durch die Pulsanstiegszeit oder die Pulsbreite festgelegt werden, sondern sie kann auch so gewählt werden, dass nur ein vorbestimmter Signalanteil der als nachrichtentechnisches Signal aufgefassten Verteilung der Lichtlaufzeiten unterdrückt oder reduziert wird.

Die Grenzfrequenz des Tiefpassfilters kann eine Frequenz sein, bei welcher das Signal um weniger als 5 dB, bevorzugt weniger als 4dB, besonders bevorzugt weniger als 3 dB, insbesondere bevorzugt weniger als 2 dB, gedämpft wird.

Die Wahl der Grenzfrequenz kann ferner auch abhängig von weiteren Faktoren sein. So können auch Wettereffekte zur Festlegung der Grenzfrequenz herangezogen werden. Wettereffekte zeigen sich in der Pulsform beziehungsweise in dem Verlauf der Verteilung der Lichtlaufzeiten.

Die Sperrfrequenz entspricht bevorzugt der halben Distanzauflösung der zweiten Vielzahl von Zeitintervallen, beziehungsweise des entsprechenden Histogramms.

Die Sperrfrequenz des Tiefpassfilters kann derart gewählt werden, dass oberhalb der Sperrfrequenz eine Dämpfung von mindestens 20 dB, bevorzugt von mindestens 40 dB, besonders bevorzugt von mindestens 60 dB, erfolgt.

Ist der Tiefpassfilter als Bandpassfilter ausgebildet, so ist unter der Grenzfrequenz des Tiefpassfilters bevorzugt die obere Grenzfrequenz des Bandpassfilters zu verstehen. Entsprechend ist unter der Sperrfrequenz des Tiefpassfilters bevorzugt die obere Sperrfrequenz des Bandpassfilters zu verstehen.

Bevorzugt kann durch einen Hochpassfilter ein DC- oder Gleichstromrausch-Offset aus der ersten Verteilung von Lichtlaufzeiten entfernt werden, insbesondere wenn der Durchlassbereich der, insbesondere kombinierten, Hochpass- und Tiefpassfilter bei der Frequenz der maximal zu erwartenden Pulsbreite liegt.

Weiter bevorzugt kann vorgesehen sein, dass der Tiefpassfilter ein Polyphasenfilter ist und/oder dass der Tiefpassfilter eine Polyphasenzerlegung der ersten Verteilung der Lichtlaufzeiten durchführt. Ferner kann der Tiefpassfilter und/oder der Polyphasenfilter als Wellendigitalfilter oder als polyphasenzerlegter Wellendigitalfilter ausgebildet sein.

Ferner kann der Tiefpassfilter auch als Mittelwertfilter ausgebildet sein. Auch weitere geeignete Ausgestaltungen des Tiefpassfilters sind denkbar.

Durch Ausbildung des Tiefpassfilters als Polyphasenfilter oder durch Durchführung einer Polyphasenzerlegung der ersten Verteilung der Lichtlaufzeiten kann die für die Durchführung des Reduktionsschritts benötigte Zeitdauer deutlich reduziert werden. Somit kann auch der Zeitraum verringert, währenddessen keine Integration von Messpulsen durchgeführt werden kann. Hierdurch wird das Verfahren zur optischen Abstandsmessung beschleunigt und die Qualität der Messergebnisse erhöht.

Die Anwendung einer Polyphasenzerlegung führt vorteilhafterweise zu einer Reduzierung der für die Reduktion und Unterdrückung der höheren Frequenzanteile notwendigen Multiplikationsschritte. Hierdurch kann Rechenzeit gespart werden.

Besonders bevorzugt kann vorgesehen sein, dass mehrere Sender und/oder mehrere Empfänger vorgesehen sind, und dass mehrere erste Verteilungen von Lichtlaufzeiten ermittelt werden, und dass in dem Reduktionsschritt Frequenzanteile der mehreren ersten Verteilungen von Lichtlaufzeiten oberhalb mindestens einer vorbestimmten Grenzfrequenz mittels mindestens einem Tiefpassfilter reduziert oder unterdrückt werden, so dass mehrere zweite Verteilungen von Lichtlaufzeiten erzeugt werden.

Dabei kann in besonders bevorzugter Weise eine für das Verfahren geeignete Vorrichtung mehrere Sender und/oder mehrere Empfänger ausweisen, welche weiter bevorzugt in Form einer Sendermatrix und/oder einer Empfängermatrix angeordnet sind. Eine Sendermatrix beziehungsweise eine Empfängermatrix besteht dabei aus einer zeilen- und reihenförmigen Anordnung von Sendern bzw. Empfängern. Eine für das Verfahren geeignete Vorrichtung mit einer Sendermatrix und einer Empfängermatrix erzeugt extrem hohe Datenraten und benötigt entsprechend hohe Datenverarbeitungsressourcen für die Verarbeitung der Verteilungen von Lichtlaufzeiten beziehungsweise der entsprechenden Histogramme oder Datenstrukturen. Als Rechenbeispiel kann eine Vorrichtung angenommen werden, welche 100 x 128 Sender und/oder 100 x 128 Empfänger in einer Sendermatrix beziehungsweise in einer Empfängermatrix aufweist. Um eine Auflösung der Abstandsmessung von 4 cm zu erreichen, muss die Zeitauflösung der Histogramme 266 ps betragen, entsprechend einer Samplingrate von 3,76 GHz. Ein Histogramm welches eine Distanz von 200 m abdeckt umfasst daher 5.000 Histogrammbins. Die Histogrammbins können eine 8 Bit-Auflösung aufweisen. Wird eine Scanrate von 25 Hz angenommen, so sind 320.000 Histogramme pro Sekunde zu übertragen entsprechend einer Datenrate von 12,8 Gbit/s. Eine derart hohe Datenrate stellt extrem hohe Anforderungen an die elektronischen Komponenten sowie an die Leistungsaufnahme und die Datenverarbeitungsg'eschwindigkeit der Vorrichtung.

Werden somit für die mehreren ersten Verteilungen von Lichtlaufzeiten die Reduktionschritte durchgeführt, so kann die Datenübertragungsrate drastisch gesenkt werden, wodurch die Kosten für das Verfahren und für eine das Verfahren umsetzende Vorrichtung gesenkt werden.

Ferner bevorzugt kann vorgesehen sein, dass in dem Reduktionsschritt die Reduzierung oder Unterdrückung der Frequenzanteile parallelisiert durchgeführt wird.

Insbesondere kann der Reduktionsschritt in einer parallelisierten Weise auf dem aus der ersten Verteilung von Lichtlaufzeiten erzeugten Histogramm, bzw. der entsprechenden Datenstruktur, angewendet werden. Der Reduktionsschritt kann dabei parallel auf verschiedenen Untermengen der Histogrammbins, das heißt auf einer Untermenge der Zeitintervalle der ersten Vielzahl von Zeitintervallen, durchgeführt werden.

Ist die für die Durchführung des Verfahrens vorgesehene Vorrichtung mit einer Sendermatrix und einer Empfängermatrix ausgebildet, sodass insbesondere für jeden Sender der Sendermatrix eine eigene erste Verteilung von Lichtlaufzeiten beziehungsweise ein eigenes erstes Histogramm ermittelt und abgespeichert wird, so kann die Vielzahl von ersten Verteilungen von Lichtlaufzeiten beziehungsweise die Vielzahl von Histogrammen in dem Reduktionsschritt parallel dezimiert oder komprimiert werden. Die parallelisierte Durchführung des Reduktionsschritts kann sowohl durch eine entsprechende Hardware, beispielsweise durch mehrere entsprechend ausgebildete Recheneinheiten der Datenverarbeitungseinheit, oder im Rahmen einer softwaretechnischen Implementierung erfolgen.

Ferner bevorzugt ist vorgesehen, dass mindestens ein Maximum in der zweiten Verteilung von Lichtlaufzeiten, bevorzugt mit einem Matching-Filter, ermittelt wird.

Das Maximum der Verteilung von Lichtlaufzeiten entspricht bevorzugt der Lichtlaufzeit der Messpulse von dem Sender zum Objekt zurück zum Empfänger.

Da alle Entfernungsinformationen zur Abstandsmessung in der zweiten Verteilung von Lichtlaufzeiten bzw. im entsprechenden Histogramm oder der Datenstruktur enthalten sind, kann der Matching-Filter beziehungsweise ein Pulsfindungsalgorithmus auf den dezimierten, komprimierten oder reduzierten Daten der zweiten Verteilung von Lichtlaufzeiten angewendet werden. Dies reduziert den Rechenaufwand um den Dezimations- oder Komprimierungsfaktor.

Weiter bevorzugt kann vorgesehen sein, dass Werte der der zweiten Vielzahl von Zeitintervallen zugeordneten zweiten Verteilung von Lichtlaufzeiten interpoliert werden.

Aufgrund der Intervallbreite der Zeitintervalle der zweiten Vielzahl Zeitintervalle entspricht die zweite Vielzahl von Zeitintervallen einer Distanzauflösung. Durch Interpolation der Werte lässt sich die feinere Distanzauflösung der ersten Vielzahl von Zeitintervallen vollständig wiederherstellen oder sogar über die ursprüngliche Distanzauflösung der ersten Vielzahl von Zeitintervallen hinaus anheben, da durch die Wahrscheinlichkeitsverteilung in den Bins, insbesondere durch die Verwendung von Informationen über die Pulsbreite und Pulsanstiegszeit der Messpulse, genauere Informationen über die Pulsposition, insbesondere über die Position des Maximums, in der zweiten Verteilung von Lichtlaufzeiten erhalten werden können. Eine derartige Interpolation wird auch "Upsampling" oder Interpolationsfilterung bzw. Abtastratenkonvertierung genannt.

Somit kann ein begrenzter Bereich um die, bevorzugt mit dem Matching-Filter gefundenen, Maxima in der zweiten Verteilung von Lichtlaufzeiten nachfolgend wieder interpoliert werden, um die ursprüngliche oder sogar eine höhere Distanzauflösung zu erhalten. Zur Interpolation kann direkt der Matching-Filter auf der hohen Frequenz, das heißt der hohen Distanzauflösung, verwendet werden, da dieser bevorzugt auch ein Tiefpassfilter ist. Insbesondere kann der Matching-Filter ausgebildet sein Pulse in Form einer Gaußkurve zu identifizieren.

Bevorzugt ist vorgesehen, dass Werte der zweiten Verteilung der Lichtlaufzeiten zwischen Stützwerten der zweiten Verteilung der Lichtlaufzeiten ermittelt, insbesondere interpoliert, werden, wobei die Stützwerte bevorzugt Zentralwerten der Zeitintervalle der zweiten Vielzahl Zeitintervalle entsprechen.

Die Interpolation kann jedoch auch auf die erste Verteilung von Lichtlaufzeiten angewendet werden, so dass Werte der der ersten Vielzahl von Zeitintervallen zugeordneten ersten Verteilung von Lichtlaufzeiten interpoliert werden. Somit kann auch ohne vorherige Durchführung eines Reduktionsschrittes eine genauere Distanzauflösung erzielt werden.

Bevorzugt ist dann vorgesehen, dass Werte der ersten Verteilung der Lichtlaufzeiten zwischen Stützwerten der ersten Verteilung der Lichtlaufzeiten ermittelt, insbesondere interpoliert, werden, wobei die Stützwerte bevorzugt Zentralwerten der Zeitintervalle der ersten Vielzahl Zeitintervalle entsprechen.

Ferner bevorzugt kann vorgesehen sein, dass die Ermittlung der, insbesondere interpolierten, Werte mit einem Tiefpassfilter durchgeführt wird, wobei der Tiefpassfilter bevorzugt der Matching-Filter ist.

Ein derartiges Verfahren wird auch Upsampling genannt. Das Upsampling kann dabei bevorzugt in einem begrenzten Bereich oder Intervall um ein mit dem Matching-Filter aufgefundenes Maximum der zweiten Verteilung von Lichtlaufzeiten durchgeführt werden.

Bevorzugt kann vorgesehen sein, dass vor der Durchführung des Reduktionsschritts kurze oder stark lokalisierte Pulse, bevorzugt Maxima, in der ersten Verteilung von Lichtlaufzeiten ermittelt werden.

Kurze oder stark lokalisierte Pulse können auftreten, wenn das Objekt, von dem die Messpulse reflektiert werden, ein starker Reflektor ist. Von einem starken Reflektor werden viele Photonen der ausgesendeten Messpulse reflektiert, sodass bereits nach einem oder wenigen Integrationszyklen ein deutliches Maximum in der ersten Verteilung von Lichtlaufzeiten ermittelt werden kann. Ein derartig starkes und scharf lokalisiertes Maximum eignet sich besonders vorteilhaft zur schnellen Bestimmung eines Abstands zu einem Objekt.

Entsprechend ist es vorteilhaft, vor oder parallel zu der Durchführung des Reduktionsschrittes einen Detektionsalgorithmus auf der ersten Verteilung von Lichtlaufzeiten, bzw. auf der entsprechenden Datenstruktur, anzuwenden, um kurze und/oder stark lokalisierte Maxima zu identifizieren. Die stark lokalisierten Maxima können dann ohne Durchführung des Reduktionsschritts, bevorzugt in einem separaten Datenverarbeitungspfad, verarbeitet und/oder ausgewertet werden.

Bevorzugt ist vorgesehen, dass Reduktionsschritt auf dem vollständigen Histogramm, insbesondere umfassend die kurzen und/oder stark lokalisierten Maxima, durchgeführt wird.

Weiter bevorzugt kann vorgesehen sein, dass die ermittelten kurzen und/oder stark lokalisierten Pulse und die erste Verteilung von Lichtlaufzeiten und/oder die zweite Verteilung von Lichtlaufzeiten in getrennten Datenverarbeitungspfaden und/oder Auswertungsschritten ausgewertet werden. Auch ist es möglich, dass die ermittelten kurzen und/oder stark lokalisierten Pulse vor der weiteren Auswertung wieder mit der aus dem Reduktionsschritt erhaltenen zweiten Verteilung von Lichtlaufzeiten zusammengeführt werden.

Eine weitere Lösung der der Erfindung zugrundeliegenden Aufgabe besteht in der Bereitstellung einer Vorrichtung zur optischen Abstandsmessung, insbesondere mittels zeitkorrelierter Einzelphotonenzählung, welche insbesondere zur Durchführung eines vorbeschriebenen Verfahrens ausgebildet ist, umfassend mindestens einen optischen Sender und mindestens einen optischen Empfänger, eine Datenverarbeitungseinheit und eine Speichervorrichtung mit mindestens zwei Speicherbereichen, wobei die Datenverarbeitungseinheit ausgebildet ist, eine erste Verteilung von Lichtlaufzeiten von detektierten Photonen zu ermitteln und die erste Verteilung der Lichtlaufzeiten in einem ersten Speicherbereich der Speichereinheit abzuspeichern, wobei die Datenverarbeitungseinheit ausgebildet ist, die erste Verteilung von Lichtlaufzeiten Zeitintervallen einer ersten Vielzahl Zeitintervalle zuzuordnen, wobei die Datenverarbeitungseinheit einen Tiefpassfilter aufweist und/oder wobei in der Datenverarbeitungseinheit ein Tiefpassfilter implementiert ist, wobei die Datenverarbeitungseinheit ausgebildet ist, in einem Reduktionsschritt Frequenzanteile der erste Verteilung der Lichtlaufzeiten oberhalb einer vorbestimmten Grenzfrequenz mittels des Tiefpassfilters zu reduzieren oder zu unterdrücken, sodass eine zweite Verteilung von Lichtlaufzeiten erzeugt wird, wobei die Datenverarbeitungseinheit ausgebildet ist, die zweite Verteilung von Lichtlaufzeiten Zeitintervallen einer zweiten Vielzahl Zeitintervalle zuzuordnen, und wobei eine Sperrfrequenz des Tiefpassfilters kleiner oder gleich der Hälfte des Kehrwerts einer kleinsten Intervallbreite der zweiten Vielzahl Zeitintervalle ist.

Insbesondere kann die Vorrichtung, weiter insbesondere die Datenverarbeitungseinheit oder die Speichervorrichtung, zur Durchführung der Verfahrensschritte nach dem vorbeschriebenen Verfahren ausgebildet sein.

Bevorzugt ist vorgesehen, dass die Datenverarbeitungseinheit dazu ausgebildet ist, die zweite Verteilung von Lichtlaufzeiten in einem zweiten Speicherbereich abzuspeichern, wobei weiter bevorzugt der zweite Speicherbereich kleiner ist als der erste Speicherbereich.

Insbesondere bei einer Implementierung der Vorrichtung mit einem ASIC können die hohen, mit der Verwendung eines Ping-Pong-Speichers verbundenen Kosten reduziert werden.

Weiter bevorzugt kann vorgesehen sein, dass die Vorrichtung ausgebildet ist, während der Durchführung des Reduktionsschritts keine optischen Messpulse auszusenden.

Zusätzlich kann vorgesehen sein, dass der Tiefpassfilter ein Polyphasenfilter ist und/oder dass der Tiefpassfilter eine Polyphasenzerlegung der ersten Verteilung der Lichtlaufzeiten durchführt.

Der Polyphasenfilter kann dabei als FIR-Filter oder als polyphaser FIR-Filter ausgebildet sein. Ferner kann der Tiefpassfilter und/oder der Polyphasenfilter als Wellendigitalfilter oder als polyphasenzerlegter Wellendigitalfilter ausgebildet sein.

Ferner kann vorgesehen sein, dass mehrere Sender und/oder mehrere Empfänger vorgesehen sind, und dass mehrere erste Verteilungen von Lichtlaufzeiten ermittelt werden, und dass in dem Reduktionsschritt Frequenzanteile der mehreren ersten Verteilungen der Lichtlaufzeiten oberhalb mindestens einer vorbestimmten Grenzfrequenz mittels mindestens einem Tiefpassfilter reduziert oder unterdrückt werden

Zudem ist bevorzugt vorgesehen, dass die mehreren Sender und/oder die mehreren Empfänger in einer Sendermatrix und/oder einer Empfängermatrix angeordnet sind, wobei bevorzugt durch selektives Ansteuern von Untermengen der mehreren Sender und/oder der mehreren Empfänger ein Detektionsbereich, bevorzugt sequentiell, abgetastet werden kann.

Durch die Verwendung mehrerer Sender und mehrerer Empfänger in Form einer Matrix und durch die sequentielle Abtastung des Detektionsbereiches fallen sehr viele erste Verteilungen von Lichtlaufzeiten an. Die dadurch benötigten hohen Datenraten zur Übertragung der Daten können durch die Anwendung des oder der Tiefpassfilter der Vorrichtung deutlich verringert werden, sodass eine schnellere und weniger rechenintensive Abstandsmessung ermöglicht wird. Insbesondere wird der Zeitraum, während dem keine Integrationszyklen durchgeführt werden können, stark reduziert.

Ferner kann vorgesehen sein, dass die Datenverarbeitungseinheit ausgebildet ist, die Reduzierung oder Unterdrückung der Frequenzanteile parallelisiert durchzuführen.

Ferner kann vorgesehen sein, dass die Datenverarbeitungseinheit einen Detektionsalgorithmus zur Ermittlung von kurzen oder stark lokalisierten Pulsen, bevorzugt Maxima, in der ersten Verteilung von Lichtlaufzeiten aufweist, und dass bevorzugt die Datenverarbeitungseinheit ausgebildet ist, die ermittelten kurzen Pulse und die erste Verteilung von Lichtlaufzeiten und/oder die zweite Verteilung von Lichtlaufzeiten in getrennten Datenverarbeitungspfaden zu übertragen und/oder auszuwerten.

Eine weitere Lösung der der Erfindung zugrundeliegenden Aufgabe besteht in einem Computerprogrammprodukt, das ein computerlesbares Speichermedium umfasst, auf dem ein Programm gespeichert ist, das es einem Computer ermöglicht, nachdem es in den Speicher des Computers geladen worden ist, ein vorbeschriebenes Verfahren, gegebenenfalls im Zusammenspiel mit einer vorbeschriebenen Vorrichtung, durchzuführen.

### Kurze Beschreibung der Figuren

Die Erfindung wird nachstehend anhand der Figuren näher erläutert.

Es zeigen:
- Fig. 1: eine Vorrichtung zur optischen Abstandsmessung, insbesondere mittels zeit-korrelierter Einzelphotonenzählung, mit einem Tiefpassfilter,
- Fig. 2: eine graphische Darstellung in Form eines ersten Histogramms einer ersten Verteilung von Lichtlaufzeiten,
- Fig. 3: eine graphische Darstellung in Form eines zweiten Histogramms einer zweiten Verteilung von Lichtlaufzeiten,
- Fig. 4: eine graphische Darstellung in Form eines dritten Histogramms einer dritten Verteilung von Lichtlaufzeiten,
- Fig. 5: ein Flussdiagram für ein Verfahren zur optischen Abstandsmessung,
- Fig. 6: eine graphische Darstellung in Form eines weiteren Histogramms einer Verteilung von Lichtlaufzeiten mit einem stark lokalisierten Maximum, und
- Fig. 7: ein Diagramm der Auswertung einer Verteilung von Lichtlaufzeiten in zwei Datenpfaden.

### Ausführliche Beschreibung der Figuren

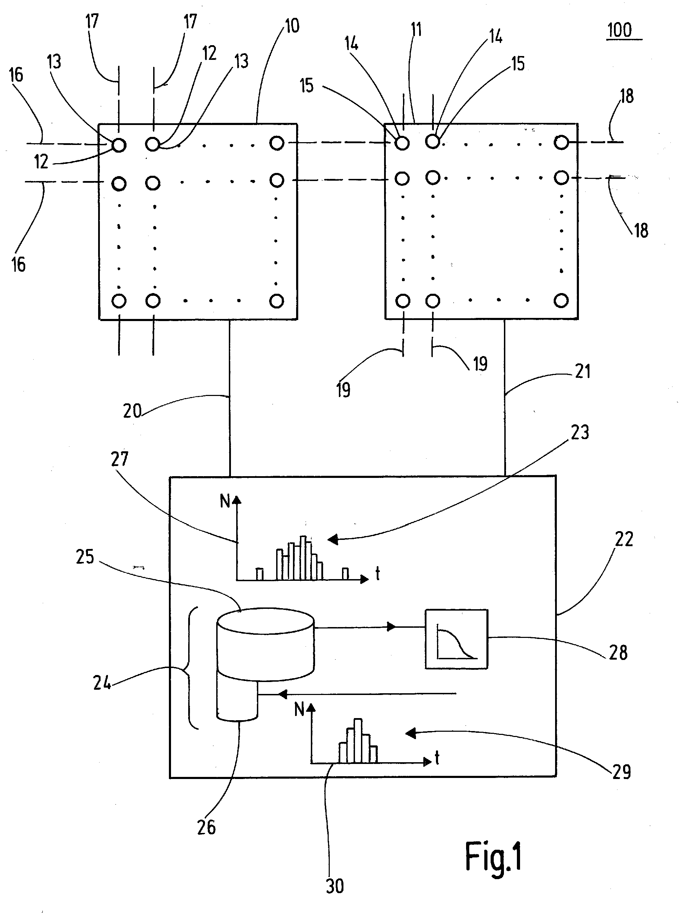

Fig. 1 zeigt eine Vorrichtung 100 zur optischen Abstandsmessung, insbesondere mittels zeitkorrelierter Einzelphotonenzählung.

Die Vorrichtung 100 weist eine Sendematrix 10 und eine Empfängermatrix 11 auf. Die Sendermatrix umfasst Sender 12, welche als VCSEL-Dioden 13 ausgebildet sind.

Die Empfängermatrix umfasst Empfänger 14, welche als Single Photon Avalanche Diodes (SPAD) 15 ausgebildet sind. Die Sender 12 der Sendermatrix 10 sind in Reihen 16 und Spalten 17 angeordnet. Ebenso sind die Empfänger 14 der Empfängermatrix 11 in Reihen 18 und Spalten 19 angeordnet. Aus Gründen der Übersichtlichkeit sind nicht alle Sender 12 und Empfänger 14 gezeigt. Die Vorrichtung 100 ist derart ausgebildet, dass Untergruppen der Sender 12 sequentiell aktiviert werden können und dass Untergruppen der Empfänger 14 sequentiell aktiviert werden können. Die entsprechend aktivierten Sender 12 senden dabei optische Messpulse aus, welche an einem Objekt reflektiert werden und von den Empfängern 14 in Form von reflektierten Photonen detektiert werden.

Sendermatrix 10 und Empfängermatrix 11 sind über Datenleitungen 20, 21 mit einer Datenverarbeitungseinheit 22 verbunden.

Die Datenverarbeitungseinheit 22 ist ausgebildet, aus den gemessenen Lichtlaufzeiten der Photonen eine erste Verteilung 23 von Lichtlaufzeiten zu ermitteln und in einer Speichereinheit 24 abzuspeichern. Die Speichereinheit umfasst einen ersten Speicherbereich 25 und einen zweiten Speicherbereich 26, wobei der zweite Speicherbereich 26 eine geringere Kapazität als der erste Speicherbereich 25 besitzt. Die Datenverarbeitungseinheit 22 ist ausgebildet, die ermittelte erste Verteilung 23 von Lichtlaufzeiten Zeitintervallen einer ersten Vielzahl von Zeitintervallen zuzuordnen und in einer Datenstruktur in dem ersten Speicherbereich 25 abzuspeichern, wobei die Datenstruktur ein erstes Histogramm 27 abbildet.

Ferner ist die Datenverarbeitungseinheit 22 dazu ausgebildet, die im ersten Speicherbereich 25 abgespeicherte erste Verteilung 23 von Lichtlaufzeiten beziehungsweise das erste abgespeicherte Histogramm 27 als nachrichtentechnisches Signal zu verarbeiten. Hierfür ist in der Datenverarbeitungseinheit 22 ein Tiefpassfilter 28 vorgesehen oder durch Software implementiert, welcher eine Grenzfrequenz und eine Sperrfrequenz aufweist. Mittels des Tiefpassfilters 28 werden in einem Reduktionsschritt Frequenzanteile der ersten Verteilung 23 von Lichtlaufzeiten oberhalb einer vorbestimmten Grenzfrequenz reduziert oder unterdrückt, so dass eine zweite Verteilung 29 von Lichtlaufzeiten erzeugt wird. Die Datenverarbeitungseinheit 22 ist ausgebildet, die zweite Verteilung 29 von Lichtlaufzeiten Zeitintervallen einer zweiten Vielzahl von Zeitintervallen zuzuordnen und in einer Datenstruktur in dem zweiten Speicherbereich 26 abzuspeichern, wobei die Datenstruktur ein zweites Histogramm 30 abbildet. Während der Durchführung des Reduktionsschritts und der Übertragung der Daten aus dem ersten Speicherbereich 25 in den zweiten Speicherbereich 26 werden bevorzugt keine Messpulse von der Sendereinheit 10 ausgesendet.

Der von der Datenverarbeitungseinheit 22 durchgeführte Reduktionsschritt wird nachfolgend näher erläutert.

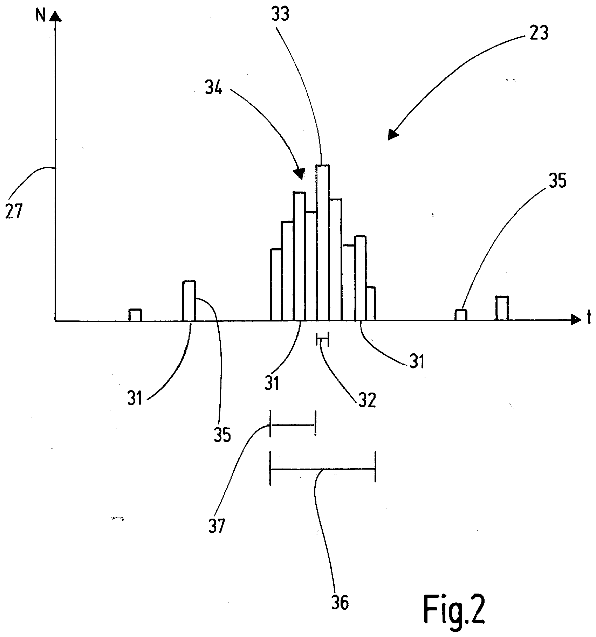

Fig. 2 zeigt das durch Zuordnung der ersten Verteilung 23 von Lichtlaufzeiten zu Zeitintervallen einer ersten Vielzahl von Zeitintervallen erzeugte erste Histogramm 27. In der Datenverarbeitungseinheit 22 und der Speichereinheit 24 wird das erste Histogramm 27 durch eine entsprechende Datenstruktur repräsentiert. Das erste Histogramm 27 ist somit eine grafische Repräsentation der in dem ersten Speicherbereich 25 abgespeicherten ersten Verteilung 23 von Lichtlaufzeiten. Auf der X-Achse des Histogramms 27 ist die Lichtlaufzeit t abgetragen, auf der Y-Achse des Histogramms 27 ist die Anzahl N der in einem Zeitintervall der Lichtlaufzeit detektierten Photonen abgetragen. Die Zeitachse t des Histogramms 27 ist in den Zeitintervallen entsprechende Bins 31 unterteilt. Der Wert N in jedem Bin 31 entspricht der über mehrere Integrationszyklen detektierten Anzahl Photonen mit einer Lichtlaufzeit t. Die Intervallbreite 32 jedes Bins 31 wird mit Δt bezeichnet. Die erste Verteilung der Lichtlaufzeiten 23 weist ein prägnantes Maximum 33 auf. Aus der der Position des Maximums 33 entsprechenden Lichtlaufzeit und der Lichtgeschwindigkeit kann der Abstand zu dem Objekt ermittelt werden. Die histogrammierte Verteilung 23 von Lichtlaufzeiten weist statistische Fluktuationen 34 auf. Ferner sind Rauschsignale 35 zu erkennen, welche nicht dem Messpuls zuzuordnen sind. Die Fluktuationen 34 beziehungsweise die Rauschsignale 35 treten auf kürzeren Zeitskalen auf, als die Pulsbreite 36 des Messpulses. Im Frequenzraum betrachtet, beispielsweise nach einer Fourier-Zerlegung, entsprechen diese Fluktuationen 34 und Rauschsignale 35 Signalanteilen einer höheren Frequenz. Wesentlich ist, dass die Fluktuationen 34 und Rauschsignale 35 keine Entfernungsinformationen zur Abstandsmessung beinhalten.

Die in dem Histogramm 27 dargestellte erste Verteilung 23 von Lichtlaufzeiten wird erfindungsgemäß als nachrichtentechnisches Signal interpretiert und durch den Tiefpassfilter 28 in einem Reduktionsschritt dezimiert. Hierfür ist eine Grenzfrequenz des Tiefpassfilters 28 derart festgelegt, dass die höheren Frequenzen, welche den Fluktuationen 34 und den Rauschsignalen 35 entsprechen, unterdrückt werden. Insbesondere wird die Grenzfrequenz derart gewählt, dass diese dem Inversen der Pulsbreite 35 oder der Pulsanstiegszeit 36 des Messpulses entspricht.

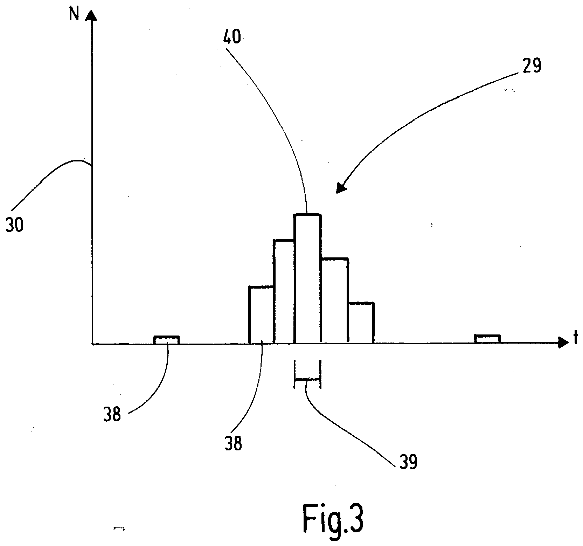

Die durch Anwendung des Tiefpassfilters 28 erhaltene zweite Verteilung 29 von Lichtlaufzeiten ist in Fig. 3 gezeigt. Die zweite Verteilung 29 von Lichtlaufzeiten ist in Form eines zweiten Histogramms 30 dargestellt. Die Bins 38 des zweiten Histogramms 30 weisen eine größere Intervallbreite 39 auf als die Bins 31 des ersten Histogramms 27. Wie an der Darstellung der Fig. 3 zu erkennen ist, sind die Fluktuationen 34 und Rauschsignale 35 aus dem ersten Histogramm 27 in der durch den Tiefpassfilter 28 erzeugten zweiten Verteilung 29 von Lichtlaufzeiten stark unterdrückt oder nicht mehr vorhanden. Aufgrund der größeren Intervallbreite 39 der Bins 38 des zweiten Histogramms 30 wird für das Abspeichern der dem zweiten Histogramms 30 entsprechenden Datenstruktur weniger Speicher im zweiten Speicherbereich 26 der Speichereinrichtung 24 benötigt. Die im zweiten Histogramm 30 dargestellte zweite Verteilung 29 von Lichtlaufzeiten enthält dabei die vollständige Entfernungsinformation.

Mittels eines Matching-Filters kann die Position des Maximums 40 der zweiten Verteilung 29 von Lichtlaufzeiten von der Datenverarbeitungseinheit 22 ermittelt werden. Hierfür kann durch Interpolation der Events N der zweiten Verteilung 29 von Lichtlaufzeiten die Auflösung der ersten Verteilung 23 von Lichtlaufzeiten zurückgewonnen werden. Es ist sogar möglich, die Auflösung über die der ersten Verteilung 23 von Lichtlaufzeiten hinaus anzuheben.

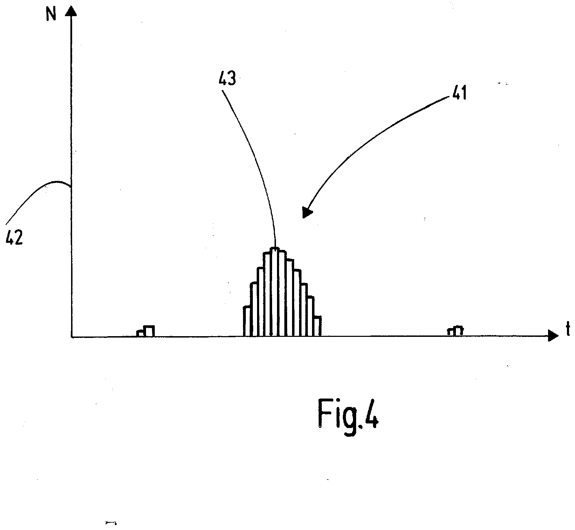

Dies kann folgendermaßen geschehen. Auf die zweite Verteilung 29 von Lichtlaufzeiten beziehungsweise auf das zweite Histogramm 30 kann ein zweiter Tiefpassfilter angewendet werden. Bevorzugt ist der zweite Tiefpassfilter der Matching-Filter. Die Anwendung des zweiten Tiefpassfilters bzw. des Matching-Filters liefert Zwischenwerte zwischen den Zentralwerten der Bins 38, welche in Form einer dritten Verteilung 41 von Lichtlaufzeiten in Fig. 4 dargestellt sind. Die Werte der dritten Verteilung 41 von Lichtlaufzeiten können ebenfalls mit einem dritten Histogramm 42 repräsentiert werden.

Wie in Fig. 4 deutlich erkennbar ist, führt die Anwendung des zweiten Tiefpassfilters auf die zweite Verteilung 29 von Lichtlaufzeiten zu einer besseren Distanzauflösung, das heißt zu einer genaueren Bestimmung der Position des Maximums 43 des Messpulse. Hierfür können Informationen über die Pulsform in den Matching-Filter einfließen, wodurch die höhere Auflösung ermöglicht wird.

Wesentlich an dem mit der Vorrichtung 100 umgesetzten Verfahren ist, dass die erste Verteilung 23 von Lichtlaufzeiten als nachrichtentechnisches Signal aufgefasst und verarbeitet wird. Durch den Reduktionsschritt, welcher auch als Dezimierungsschritt, Abtastratenkonvertierung oder ein "Downsampling" bezeichnet werden kann, wird die Datenmenge, welche aus dem ersten Speicherbereich 25 in den zweiten Speicherbereich 26 übertragen werden muss, reduziert werden. Aufgrund der von dem ersten Speicherbereich 25 in den zweiten Speicherbereich 26 zu übertragenden und in dem zweiten Speicherbereich 26 abgespeicherten geringeren Datenmenge verkürzt sich die Übertragungsdauer aus dem zweiten Speicherbereich 26 zur weiteren Verarbeitung. Alternativ oder gleichzeitig kann die Reduzierung der Datenmenge auch genutzt werden, die Datenübertragungsgeschwindigkeit, d.h. die Bandbreite der Datenübertragung, zu reduzieren. Darüber hinaus kann der zweite Speicherbereich 26 deutlich kleiner ausgebildet sein als der erste Speicherbereich 25.

Während der Übertragung der Daten aus dem ersten Speicherbereich 25 in den zweiten Speicherbereich 26 muss in der Regel die Aussendung von Messpulsen unterbrochen werden, da während der Übertragung ein Abspeichern der detektierten Events in dem ersten Speicherbereich 25 nicht möglich ist. Durch die beschleunigte Übertragung der Daten mittels des Reduktionschrittes kann dieser Zeitraum stark verkürzt werden.

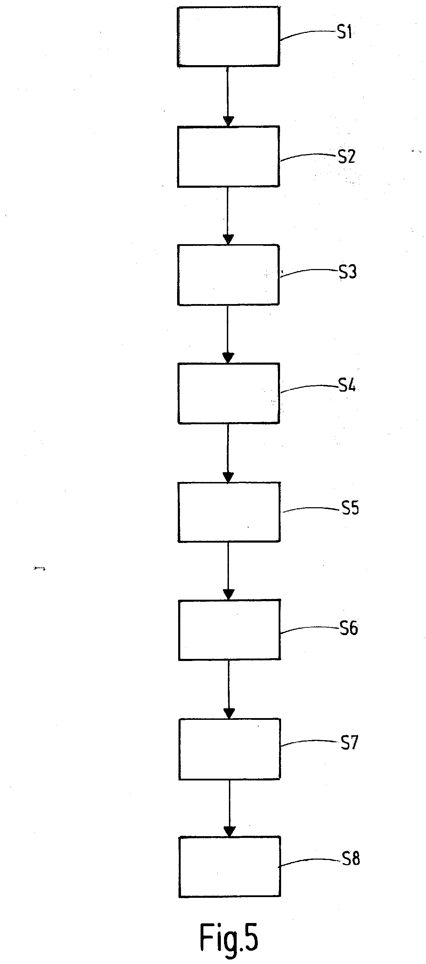

Fig. 5 zeigt ein Flussdiagramm für ein Verfahren zur optischen Abstandsmessung, insbesondere mittels zeitkorrelierter Einzelphotonenzählung.

In einem ersten Verfahrensschritt S1 werden mehrere optische Messpulse von mindestens einem Sender 12 ausgesendet. Die optischen Messpulse werden in einem zweiten Verfahrensschritt S2 von einem Objekt reflektiert und Photonen der reflektierten optischen Messpulse werden in einem dritten Verfahrensschritt S3 von mindestens einem Empfänger 14 detektiert. Über mehrere Integrationszyklen wird in einem vierten Verfahrensschritt S4 eine erste Verteilung 23 von Lichtlaufzeiten der detektierten Photonen, bevorzugt von einer Datenverarbeitungseinheit 22, ermittelt und in einem ersten Speicherbereich 25 einer Speichereinheit 24 abgespeichert. Die Daten können dabei in einer Datenstruktur, welche ein erstes Histogramm 27 repräsentiert, abgespeichert werden. In einem als Reduktionsschritt ausgebildeten Verfahrensschritt S5 werden Frequenzanteile der ersten Verteilung 23 von Lichtlaufzeiten oberhalb einer vorbestimmten Grenzfrequenz mittels eines Tiefpassfilters 28 reduziert oder unterdrückt, sodass eine zweite Verteilung 29 von Lichtlaufzeiten erzeugt wird. Die zweite Verteilung 29 von Lichtlaufzeiten wird in einem weiteren Verfahrensschritt S6 in einem zweiten Speicherbereich 26 der Speichereinheit 24 abgespeichert. Die zweite Verteilung 29 von Lichtlaufzeiten wird in einer Datenstruktur abgespeichert, welche einem zweiten Histogramm 30 entspricht, wobei die Intervallbreiten 39 des zweiten Histogramms 30 größer sind als die Intervallbreiten 31 des ersten Histogramms 27. Der zweite Speicherbereich 26 kann daher kleiner ausfallen als der erste Speicherbereich 25.

In einem nächsten Verfahrensschritt S7 kann optional durch Anwendung eines Matching-Filters auf die zweite Verteilung 29 die Position eines Maximums 40 des Pulses ermittelt werden, woraus sich unter Zuhilfenahme der Lichtgeschwindigkeit die Distanz zu dem Objekt bestimmen lässt.

Optional kann ferner vorgesehen sein, dass der Matching-Filter in einem weiteren Verfahrensschritt S8 dazu genutzt wird, durch Interpolation ein Upsampling der zweiten Verteilung 29 von Lichtlaufzeiten durchzuführen. Da in den einzelnen Bins 38 des zweiten Histogramms 30 der zweiten Verteilung 29 von Lichtlaufzeiten weitere Informationen über die Pulsform vorhanden sind, lässt sich durch den Interpolationsschritt die Genauigkeit der Abstandsmessung sogar über die Genauigkeit der ersten Verteilung 23 von Lichtlaufzeiten erhöhen. Für den Interpolationsschritt wird eine Grenzfrequenz gewählt, welche der höheren Frequenz der gewünschten höheren Auflösung entspricht.

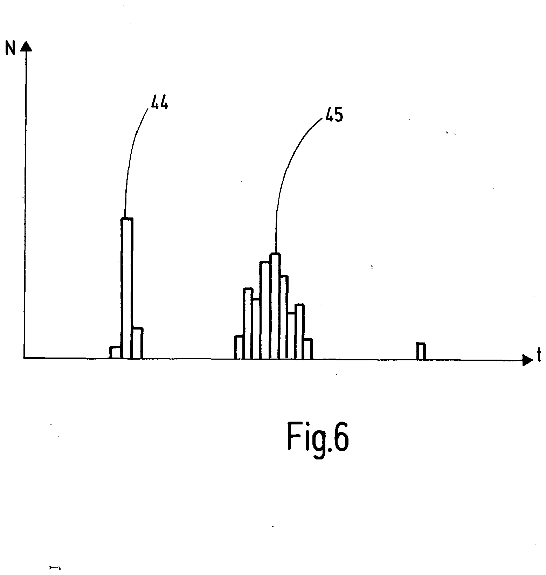

Fig. 6 zeigt einen Spezialfall. In dem in Figur 6 dargestellten Histogramm sind ein erstes Maximum 44 und ein zweites Maximum 45 von Messpulsen zu erkennen, wobei das erste Maximum 44 besonders stark lokalisiert ist. In dem Histogramm sind das erste Maximum 44 und das zweite Maximum 45 zueinander beabstandet lokalisiert. Grundsätzlich können die beiden Maxima 44, 45 auch einander überlagert sein. Derartig stark lokalisierte oder kurze Maxima 44 treten auf, wenn das Objekt ein starker Reflektor ist, sodass sehr viele Photonen der Messpulse reflektiert und detektiert werden. Ein solches scharfes Maximum 44 eignet sich besonders gut zur Abstandsmessung. Es ist daher nicht notwendig, für das erste Maximum 44 den Reduktionsschritt durchzuführen, zumal die Gefahr besteht, dass das stark lokalisierte und daher einer hohen Frequenz entsprechende erste Maximum 44 in dem Reduktionsschritt ebenfalls unterdrückt wird. Die starke Lokalisation des ersten Maximums 44 kann durch Sättigungseffekte der Empfänger 14 begründet sein, welche dazu führen, dass nur die Anstiegsflanke der reflektierten Messpulse detektiert wird.

Um das erste Maximum 44 für die Abstandsmessung zu nutzen, kann dieses mit einem entsprechenden Detektionsalgorithmus identifiziert werden. Anschließend wird das identifizierte erste Maximum 44 ohne Anwendung des Reduktionsschrittes weiterverarbeitet. Hierfür kann neben einem ersten Datenverarbeitungspfad 46 für das durch Anwendung des Tiefpassfilters 28 erhaltene zweite Histogramm 30 ein zweiter Datenverarbeitungspfad 47 vorgesehen sein, in dem das erste Maximum 44 parallel ausgewertet wird.

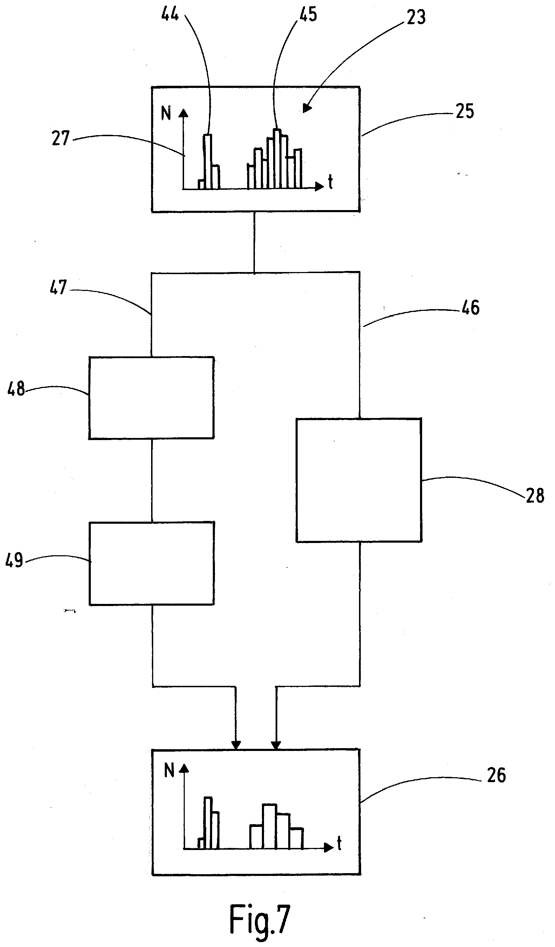

Fig. 7 zeigt eine solche parallele Verarbeitung. Die erste Verteilung 23 von Lichtlaufzeiten ist als Datenstruktur für ein erstes Histogramm 27 in dem ersten Speicherbereich 25 abgespeichert. In einem ersten Datenverarbeitungspfad 46 wird auf die erste Verteilung 23 von Lichtlaufzeiten der Reduktionsschritt mittels des Tiefpassfilters 28 angewendet Über einen zweiten Datenverarbeitungspfad 46 wird parallel mittels eines ersten Softwaremodul 48 für einen Detektionsalgorithmus ein scharf lokalisiertes erstes Maximum 44 in der ersten Verteilung 23 von Lichtlaufzeiten detektiert. Das scharf lokalisierte Maximum 44 wird anschließend von einem zweiten Softwaremodul 49 isoliert. Die Datenverarbeitungspfade 46, 47 werden zusammengeführt und die zusammengeführten Daten werden als Histogramm im zweiten Speicherbereich 26 abgespeichert und anschließend weiter verarbeitet.

### Liste der Bezugszeichen

- 100: Vorrichtung

- 10: Sendermatrix
- 11: Empfängermatrix
- 12: Sender
- 13: VCSEL-Diode
- 14: Empfänger
- 15: SPAD
- 16: Reihe
- 17: Spalte
- 18: Reihe
- 19: Spalte

- 20: Datenleitung
- 21: Datenleitung
- 22: Datenverarbeitungseinheit
- 23: erste Verteilung
- 24: Speichereinheit
- 25: Erster Speicherbereich
- 26: Zweiter Speicherbereich
- 27: Erstes Histogramm
- 28: Tiefpassfilter
- 29: Zweite Verteilung

- 30: Zweites Histogramm
- 31: Bin
- 32: Intervallbreite
- 33: Maximum
- 34: Fluktuation
- 35: Rauschsignal
- 36: Pulsbreite
- 37: Pulsanstiegszeit
- 38: Bin
- 39: Intervallbreite

- 40: Maximum
- 41: Dritte Verteilung
- 42: Drittes Histogramm
- 43: Maximum
- 44: Erstes Maximum
- 45: Zweites Maximum
- 46: Erster Datenpfad
- 47: Zweiter Datenpfad

- S1-S8: Verfahrensschritte

## Patentansprüche

1. Verfahren zur optischen Abstandsmessung, insbesondere mittels zeitkorrelierter Einzelphotonenzählung, wobei mehrere optische Messpulse von mindestens einem Sender (12) ausgesendet werden, wobei die optischen Messpulse an einem Objekt reflektiert werden, wobei Photonen der reflektierten optischen Messpulse von mindestens einem Empfänger (14) detektiert werden, wobei eine erste Verteilung (23) von Lichtlaufzeiten der detektierten Photonen ermittelt wird, wobei die erste Verteilung (23) von Lichtlaufzeiten in einem ersten Speicherbereich (25) einer Speichereinheit (24) abgespeichert wird, wobei die erste Verteilung (23) von Lichtlaufzeiten Zeitintervallen einer ersten Vielzahl Zeitintervalle zugeordnet wird,
wobei in einem Reduktionsschritt Frequenzanteile der ersten Verteilung (23) von Lichtlaufzeiten oberhalb einer vorbestimmten Grenzfrequenz mittels eines Tiefpassfilters (28) reduziert oder unterdrückt werden, so dass eine zweite Verteilung (29) von Lichtlaufzeiten erzeugt wird,
**dadurch gekennzeichnet,**
**dass** die zweite Verteilung (29) von Lichtlaufzeiten Zeitintervallen einer zweiten Vielzahl Zeitintervalle zugeordnet wird, und dass eine Sperrfrequenz des Tiefpassfilters (28) kleiner oder gleich der Hälfte des Kehrwerts einer kleinsten Intervallbreite (39) der zweiten Vielzahl Zeitintervalle gewählt wird.

2. Verfahren nach Anspruch 1, **dadurch gekennzeichnet, dass** die zweite Verteilung (29) von Lichtlaufzeiten in einem zweiten Speicherbereich (26) der Speichereinheit (24) abgespeichert wird, wobei bevorzugt der zweite Speicherbereich (26) kleiner ist als der erste Speicherbereich (25).

3. Verfahren nach Anspruch 1 oder 2, **dadurch gekennzeichnet, dass** während des Reduktionsschritts und/oder des Abspeicherns der zweiten Verteilung (29) von Lichtlaufzeiten in dem zweiten Speicherbereich (26) keine optischen Messpulse von dem mindestens einen Sender (12) ausgesendet werden und/oder keine erste Verteilung (23) von Lichtlaufzeiten ermittelt wird und/oder keine erste Verteilung (23) von Lichtlaufzeiten in dem ersten Speicherbereich (25) abgespeichert wird, und/oder dass die zweite Verteilung (29) von Lichtlaufzeiten aus dem zweiten Speicherbereich (26) ausgelesen wird, wobei während des Auslesens des zweiten Speicherbereichs (26) optische Messpulse von dem mindestens einen Sender (12) ausgesendet werden und/oder eine, insbesondere weitere, erste Verteilung (23) von Lichtlaufzeiten von detektierten Photonen ermittelt wird und/oder eine, insbesondere weitere, erste Verteilung (23) von Lichtlaufzeiten in dem ersten Speicherbereich (25) der Speichereinheit (24) abgespeichert wird, wobei die, insbesondere weitere, erste Verteilung (23) von Lichtlaufzeiten Zeitintervallen der ersten Vielzahl Zeitintervalle zugeordnet wird.

4. Verfahren nach einem der vorgenannten Ansprüche, **dadurch gekennzeichnet, dass** die zweite Vielzahl Zeitintervalle weniger Zeitintervalle umfasst als die erste Vielzahl Zeitintervalle.

5. Verfahren nach einem der vorgenannten Ansprüche, **dadurch gekennzeichnet, dass** der Reduktionsschritt nur für einen Teilbereich der ersten Verteilung (23) von Lichtlaufzeiten und/oder der ersten Vielzahl Zeitintervalle durchgeführt wird, und/oder dass für verschiedene Teilbereiche der ersten Verteilung (23) von Lichtlaufzeiten und/oder der ersten Vielzahl Zeitintervalle unterschiedliche Sperrfrequenzen gewählt werden.

6. Verfahren nach einem der vorgenannten Ansprüche, **dadurch gekennzeichnet, dass** die vorbestimmte Grenzfrequenz als Grenzfrequenz des Tiefpassfilters (28) gewählt wird und durch eine Pulsbreite (36) und/oder eine Pulsanstiegszeit (37) der optischen Messpulse festgelegt wird, und/oder dass die Grenzfrequenz einer Frequenz einer Fourier-Zerlegung der ersten Verteilung (23) der Lichtlaufzeiten entspricht, wobei bevorzugt Frequenzen oberhalb der Grenzfrequenz weniger als 20%, bevorzugt weniger als 10%, besonders bevorzugt weniger als 5%, ganz besonders bevorzugt weniger als 1%, zu der ersten Verteilung (23) der Lichtlaufzeiten beitragen.

7. Verfahren nach einem der vorgenannten Ansprüche, **dadurch gekennzeichnet, dass** mehrere Sender (12) und/oder mehrere Empfänger (14) vorgesehen sind, und dass mehrere erste Verteilungen (23) von Lichtlaufzeiten ermittelt werden, und dass in dem Reduktionsschritt Frequenzanteile der mehreren ersten Verteilungen (23) von Lichtlaufzeiten oberhalb mindestens einer vorbestimmten Grenzfrequenz mittels mindestens einem Tiefpassfilter (28) reduziert oder unterdrückt werden, so dass mehrere zweite Verteilungen (29) von Lichtlaufzeiten erzeugt werden.

8. Verfahren nach einem der vorgenannten Ansprüche, **dadurch gekennzeichnet, dass** in dem Reduktionsschritt die Reduzierung oder Unterdrückung der Frequenzanteile parallelisiert durchgeführt wird, und/oder dass mindestens ein Maximum (40) in der zweiten Verteilung (29) von Lichtlaufzeiten, bevorzugt mit einem Matching-Filter, ermittelt wird.

9. Verfahren nach einem der vorgenannten Ansprüche, **dadurch gekennzeichnet, dass** Werte der zweiten Verteilung (29) der Lichtlaufzeiten zwischen Stützwerten der zweiten Verteilung (29) der Lichtlaufzeiten ermittelt, insbesondere interpoliert, werden, wobei die Stützwerte bevorzugt Zentralwerten der Zeitintervalle der zweiten Vielzahl Zeitintervalle entsprechen, wobei besonders bevorzugt die Ermittlung der Werte mit einem Tiefpassfilter durchgeführt wird, wobei der Tiefpassfilter ganz besondere bevorzugt der Matching-Filter ist.

10. Verfahren nach einem der vorgenannten Ansprüche, **dadurch gekennzeichnet, dass** vor dem Reduktionsschritt kurze oder stark lokalisierte Pulse, bevorzugt Maxima (44), in der ersten Verteilung (23) von Lichtlaufzeiten ermittelt werden, wobei bevorzugt die ermittelten kurzen Pulse und die erste Verteilung (23) von Lichtlaufzeiten und/oder die zweite Verteilung (29) von Lichtlaufzeiten in getrennten Datenverarbeitungspfaden (46, 47) ausgewertet werden.

11. Vorrichtung (100) zur optischen Abstandsmessung, insbesondere mittels zeitkorrelierter Einzelphotonenzählung, ausgebildet zur Durchführung eines Verfahrens nach einem der vorgenannten Ansprüche, umfassend mindestens einen optischen Sender (12) und mindestens einen optischen Empfänger (14), eine Datenverarbeitungseinheit (22) und eine Speichervorrichtung (24) mit mindestens zwei Speicherbereichen (25, 26), wobei die Datenverarbeitungseinheit (22) ausgebildet ist eine erste Verteilung (23) von Lichtlaufzeiten von detektierten Photonen zu ermitteln und die erste Verteilung (23) der Lichtlaufzeiten in einem ersten Speicherbereich (25) der Speichereinheit (24) abzuspeichern, wobei die Datenverarbeitungseinheit (22) ausgebildet ist, die erste Verteilung (23) von Lichtlaufzeiten Zeitintervallen einer ersten Vielzahl Zeitintervalle zuzuordnen,
wobei die Datenverarbeitungseinheit (24) einen Tiefpassfilter (28) aufweist und/oder wobei in der Datenverarbeitungseinheit (22) ein Tiefpassfilter (28) implementiert ist, wobei die Datenverarbeitungseinheit (22) ausgebildet ist, in einem Reduktionsschritt Frequenzanteile der ersten Verteilung (23) der Lichtlaufzeiten oberhalb einer vorbestimmten Grenzfrequenz mittels des Tiefpassfilters (28) zu reduzieren oder zu unterdrücken, so dass eine zweite Verteilung (29) von Lichtlaufzeiten erzeugt wird,
**dadurch gekennzeichnet,**
**dass** die Datenverarbeitungseinheit (22) ausgebildet ist, die zweite Verteilung (29) von Lichtlaufzeiten Zeitintervallen einer zweiten Vielzahl Zeitintervalle zuzuordnen, und dass eine Sperrfrequenz des Tiefpassfilters (28) kleiner oder gleich der Hälfte des Kehrwerts einer kleinsten Intervallbreite (39) der zweiten Vielzahl Zeitintervalle ist.

12. Vorrichtung (100) nach Anspruch 11, **dadurch gekennzeichnet, dass** die Datenverarbeitungseinheit (22) dazu ausgebildet ist, die zweite Verteilung (29) von Lichtlaufzeiten in einem zweiten Speicherbereich (26) abzuspeichern, wobei bevorzugt der zweite Speicherbereich (26) kleiner ist als der erste Speicherbereich (25).

13. Vorrichtung (100) nach Anspruch 11 oder 12, **dadurch gekennzeichnet, dass** der Tiefpassfilter (28) ein Polyphasen-Filter ist, und/oder das der Tiefpassfilter(28) eine Polyphasenzerlegung der ersten Verteilung (23) der Lichtlaufzeiten durchführt.

14. Vorrichtung (100) nach einem der Ansprüche 11 bis 13, **dadurch gekennzeichnet, dass** mehrere Sender (12) und/oder mehrere Empfänger (14) vorgesehen sind, und dass mehrere erste Verteilungen (23) von Lichtlaufzeiten ermittelt werden, und dass in dem Reduktionsschritt Frequenzanteile der mehreren ersten Verteilungen (23) der Lichtlaufzeiten oberhalb mindestens einer vorbestimmten Grenzfrequenz mittels mindestens einem Tiefpassfilter (28) reduziert oder unterdrückt werden, und/oder dass die mehreren Sender (12) und/oder die mehreren Empfänger (14) in einer Sendermatrix (10) und/oder einer Empfängermatrix (11) angeordnet sind, wobei bevorzugt durch selektives Ansteuern von Untermengen der mehreren Sender (12) und/oder der mehreren Empfänger (14) ein Detektionsbereich, bevorzugt sequentiell, abgetastet werden kann.

15. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren gemäß einem der Ansprüche 1 bis 10, gegebenenfalls im Zusammenspiel mit einer Vorrichtung (100) gemäß einem der Ansprüche 11 bis 14, durchzuführen.

## Claims

1. Method for optical distance measurement, in particular by means of time-correlated individual photon counting, wherein several optical measuring pulses are emitted by at least one transmitter (12), wherein the optical measuring pulses are reflected on an object, wherein photons of the reflected optical measuring pulses are detected by at least one receiver (14), wherein a first distribution (23) of light propagation times of the detected photons is determined, wherein the first distribution (23) of light propagation times is stored in a first storage area (25) of a storage unit (24), wherein the first distribution (23) of light propagation times is assigned to time intervals of a first plurality of time intervals,
wherein in a reduction step frequency components of the first distribution (23) of light propagation times above a predetermined limit frequency are reduced or suppressed by means of a low-pass filter (28), so that a second distribution (29) of light propagation times is generated,
**characterized in that**
the second distribution (29) of light propagation times is assigned to time intervals of a second plurality of time intervals, and that a blocking frequency of the low-pass filter (28) is selected to be smaller than or equal to half the reciprocal value of a smallest interval width (39) of the second plurality of time intervals.

2. Method according to claim 1, **characterized in that** the second distribution (29) of light propagation times is stored in a second storage area (26) of the storage unit (24), wherein the second storage area (26) is preferably smaller than the first storage area (25).

3. Method according to claim 1 or 2, **characterized in that** during the reduction step and/or the storage of the second distribution (29) of light propagation times in the second storage area (26), no optical measurement pulses are emitted by the at least one transmitter (12) and/or no first distribution (23) of light propagation times is determined and/or no first distribution (23) of light propagation times is stored in the first storage area (25), and/or that the second distribution (29) of light propagation times is read out from the second storage area (26), wherein during the reading out of the second storage area (26) optical measuring pulses are emitted by the at least one transmitter (12), and/or a, in particular further, first distribution (23) of light propagation times of detected photons is determined and/or a, in particular further, first distribution (23) of light propagation times is stored in the first storage area (25) of the storage unit (24), wherein the, in particular further, first distribution (23) of light propagation times is assigned to time intervals of the first plurality of time intervals.

4. Method according to one of the preceding claims, **characterized in that** that the second plurality of time intervals comprises fewer time intervals than the first plurality of time intervals.

5. Method according to one of the preceding claims, **characterized in that** the reduction step is only carried out for a sub-area of the first distribution (23) of light propagation times and/or the first plurality of time intervals, and/or that different blocking frequencies are selected for different sub-areas of the first distribution (23) of light propagation times and/or the first plurality of time intervals.

6. Method according to one of the preceding claims, **characterized in that** the predetermined limit frequency is selected as the limit frequency of the low-pass filter (28) and is defined by a pulse width (36) and/or a pulse rise time (37) of the optical measurement pulses, and/or that the limit frequency of a frequency of a Fourier decomposition of the first distribution ( 23) corresponds to the light propagation times, wherein preferably frequencies above the limit frequency contribute less than 20%, preferably less than 10%, particularly preferably less than 5%, very particularly preferably less than 1% to the first distribution (23) of the light propagation times.

7. Method according to one of the preceding claims, **characterized in that** several transmitters (12) and/or several receivers (14) are provided, and that several first distributions (23) of light propagation times are determined, and that in the reduction step frequency components of the several first distributions (23) of light propagation times above at least one predetermined limit frequency are reduced or suppressed by means of at least one low-pass filter (28), so that several second distributions (29) of light propagation times are generated.

8. Method according to one of the preceding claims, **characterized in that** in the reduction step the reduction or suppression of the frequency components is carried out in parallel, and/or that at least one maximum (40) is determined in the second distribution (29) of light propagation times, preferably with a matching filter.

9. Method according to one of the preceding claims, **characterized in that** values of the second distribution (29) of the light propagation times are determined, in particular interpolated, between supporting values of the second distribution (29) of the light propagation times, wherein the supporting values preferably correspond to central values of the time intervals of the second plurality of time intervals, wherein particularly preferred the determination of the values is carried out with a low-pass filter, wherein the low-pass filter very particularly preferably is the matching filter.

10. Method according to one of the preceding claims, **characterized in that** before the reduction step, short or strongly localized pulses, preferably maxima (44), are determined in the first distribution (23) of light propagation times, wherein preferably the determined short pulses and the first distribution (23) of light propagation times and/or the second distribution (29) of light propagation times are evaluated in separate data processing paths (46, 47).

11. Device (100) for optical distance measurement, in particular by means of time-correlated individual photon counting, designed to carry out a method according to one of the preceding claims, comprising at least one optical transmitter (12) and at least one optical receiver (14), a data processing unit (22) and a storage device (24) with at least two storage areas (25, 26), wherein the data processing unit (22) is configured to determine a first distribution (23) of light propagation times of detected photons and to store the first distribution (23) of the light propagation times in a first storage area (25) of the storage unit (24), wherein the data processing unit (22) is configured to assign the first distribution (23) of light propagation times to time intervals of a first plurality of time intervals,
wherein the data processing unit (24) has a low-pass filter (28) and/or wherein in the data processing unit (22) a low-pass filter (28) is implemented, wherein the data processing unit (22) is configured, in a reduction step, to reduce or suppress frequency components of the first distribution (23) of the light propagation times above a predetermined limit frequency by means of the low-pass filter (28), so that a second distribution (29) of light propagation times is produced,
**characterized in that**
the data processing unit (22) is configured to assign the second distribution (29) of light propagation times to time intervals of a second plurality of time intervals, and that a blocking frequency of the low-pass filter (28) is smaller than or equal to half the reciprocal value of a smallest interval width (39) of the second plurality of time intervals.

12. Device (100) according to claim 11, **characterized in that** the data processing unit (22) is configured to store the second distribution (29) of light propagation times in a second storage area (26), wherein preferably the second storage area (26) is smaller than the first storage area (25).

13. Device (100) according to claim 11 or 12, **characterized in that** the low-pass filter (28) is a polyphase filter and/or that the low-pass filter (28) performs a polyphase decomposition of the first distribution (23) of the light propagation times.

14. Device (100) according to one of claims 11 to 13, **characterized in that** several transmitters (12) and/or several receivers (14) are provided, and that several first distributions (23) of light propagation times are determined, and that in the reduction step frequency components of the several first distributions (23) of the light propagation times above at least one predetermined limit frequency are reduced or suppressed by means of at least one low-pass filter (28), and/or that the several transmitters (12) and/or the several receivers (14) are arranged in a transmitter matrix (10) and/or a receiver matrix (11), wherein, preferably by selectively driving subsets of the several transmitters (12) and/or the several receivers (14), a detection area can be scanned, preferably sequentially.

15. Computer program product comprising a computer-readable storage medium on which is stored a program which, after being loaded into the computer's memory, enables a computer to carry out a method according to any one of claims 1 to 10, optionally in conjunction with a device (100) according to any one of claims 11 to 14.

## Revendications

1. Procédé pour la mesure optique de la distance, en particulier au moyen d'un comptage monophotonique corrélé au temps, dans lequel plusieurs impulsions optiques de mesure sont émises par au moins un émetteur (12), dans lequel les impulsions optiques de mesure sont réfléchies au niveau d'un objet, dans lequel des photons des impulsions optiques de mesure réfléchies sont détectés par au moins un récepteur (14), dans lequel une première répartition (23) de temps de vol de lumière des photons détectés est déterminée, dans lequel la première répartition (23) de temps de vol de lumière est enregistrée dans une première zone de mémoire (25) d'une unité de mémoire (24), dans lequel la première répartition (23) de temps de vol de lumière est associée à des intervalles de temps d'une première pluralité d'intervalles de temps,
dans lequel, dans une étape de réduction, des fractions de fréquence de la première répartition (23) de temps de vol de lumière au-dessus d'une fréquence limite prédéfinie sont réduites ou supprimées au moyen d'un filtre passe-bas (28) de sorte qu'une deuxième répartition (29) de temps de vol de lumière est générée,
**caractérisé en ce que**
la deuxième répartition (29) de temps de vol de lumière est associée à des intervalles de temps d'une deuxième pluralité d'intervalles de temps et qu'une fréquence de coupure du filtre passe-bas (28) est choisie pour être inférieure ou égale à la moitié de l'inverse d'une largeur d'intervalle la plus petite (39) de la deuxième pluralité d'intervalles de temps.

2. Procédé selon la revendication 1, **caractérisé en ce que** la deuxième répartition (29) de temps de vol de lumière est enregistrée dans une deuxième zone de mémoire (26) de l'unité de mémoire (24), dans lequel la deuxième zone de mémoire (26) est de préférence plus petite que la première zone de mémoire (25).

3. Procédé selon la revendication 1 ou 2, **caractérisé en ce que**, pendant l'étape de réduction et/ou l'enregistrement de la deuxième répartition (29) de temps de vol de lumière dans la deuxième zone de mémoire (26), aucune impulsion optique de mesure n'est émise par l'au moins un émetteur (12) et/ou aucune première répartition (23) de temps de vol de lumière n'est déterminée et/ou aucune première répartition (23) de temps de vol de lumière n'est enregistrée dans la première zone de mémoire (25), et/ou **en ce que** la deuxième répartition (29) de temps de vol de lumière est lue à partir de la deuxième zone de mémoire (26), dans lequel, pendant la lecture de la deuxième zone de mémoire (26), des impulsions optiques de mesure sont émises par l'au moins un émetteur (12) et/ou une, en particulier autre, première répartition (23) de temps de vol de lumière de photons détectés est déterminée et/ou une, en particulier autre, première répartition (23) de temps de vol de lumière est enregistrée dans la première zone de mémoire (25) de l'unité de mémoire (24), dans lequel cette, en particulier autre, première répartition (23) de temps de vol de lumière est associée à des intervalles de temps de la première pluralité d'intervalles de temps.

4. Procédé selon l'une des revendications précédentes, **caractérisé en ce que** la deuxième pluralité d'intervalles de temps comprend moins d'intervalles de temps que la première pluralité d'intervalles de temps.

5. Procédé selon l'une des revendications précédentes, **caractérisé en ce que** l'étape de réduction est réalisée seulement pour une partie de la première répartition (23) de temps de vol de lumière et/ou la première pluralité d'intervalles de temps et/ou **en ce que**, pour différentes parties de la première répartition (23) de temps de vol de lumière et/ou la première pluralité d'intervalles de temps, des fréquences de coupure différentes sont choisies.

6. Procédé selon l'une des revendications précédentes, **caractérisé en ce que** la fréquence limite prédéfinie est choisie en tant que fréquence limite du filtre passe-bas (28) et est définie par une largeur d'impulsion (36) et/ou un temps de montée d'impulsion (37) des impulsions optiques de mesure, et/ou **en ce que** la fréquence limite correspond à une fréquence d'une analyse de Fourier de la première répartition (23) des temps de vol de lumière, dans lequel, de manière préférée, des fréquences au-dessus de la fréquence limite contribuent de l'ordre de moins de 20%, de préférence de l'ordre de moins de 10%, de manière particulièrement préférée de l'ordre de moins de 5%, de manière très particulièrement préférée de l'ordre de moins de 1%, à la première répartition (23) des temps de vol de lumière.

7. Procédé selon l'une des revendications précédentes, **caractérisé en ce que** plusieurs émetteurs (12) et/ou plusieurs récepteurs (14) sont prévus, et **en ce que** plusieurs premières répartitions (23) de temps de vol de lumière sont déterminées et **en ce qu'**à l'étape de réduction, des fractions de fréquence des plusieurs premières répartitions (23) de temps de vol de lumière au-dessus d'au moins une fréquence limite prédéfinie sont réduites ou supprimées au moyen d'au moins un filtre passe-bas (28), de sorte que plusieurs deuxièmes répartitions (29) de temps de vol de lumière sont générées.

8. Procédé selon l'une des revendications précédentes, **caractérisé en ce que**, dans l'étape de réduction, la réduction ou suppression des fractions de fréquence est réalisée de manière parallélisée et/ou **en ce qu'**au moins un maximum (40) dans la deuxième répartition (29) de temps de vol de lumière est déterminé, de préférence avec un filtre d'adaptation.

9. Procédé selon l'une des revendications précédentes, **caractérisé en ce que** des valeurs de la deuxième répartition (29) des temps de vol de lumière sont déterminées entre des valeurs de base de la deuxième répartition (29) des temps de vol de lumière, en particulier interpolées, dans lequel les valeurs de base correspondent de préférence à des valeurs centrales des intervalles de temps de la deuxième pluralité d'intervalles de temps, dans lequel, de manière particulièrement préférée, la détermination des valeurs est effectuée avec un filtre passe-bas, dans lequel le filtre passe-bas est, de manière particulièrement préférée, le filtre d'adaptation.

10. Procédé selon l'une des revendications précédentes, **caractérisé en ce qu'**avant l'étape de réduction, des impulsions courtes ou fortement localisées, de préférence des maximums (44), sont déterminées dans la première répartition (23) de temps de vol de lumière, dans lequel, de manière préférée, les impulsions courtes déterminées et la première répartition (23) de temps de vol de lumière et/ou la deuxième répartition (29) de temps de vol de lumière sont évaluées dans des chemins de traitement de données (46, 47) séparés.

11. Dispositif (100) de mesure optique de la distance, en particulier au moyen d'un comptage monophotonique corrélé au temps, réalisé pour l'exécution d'un procédé selon l'une des revendications précédentes, comprenant au moins un émetteur optique (12) et au moins un récepteur optique (14), une unité de traitement de données (22) et un dispositif de mémoire (24) avec au moins deux zones de mémoire (25, 26), dans lequel l'unité de traitement de données (22) est réalisée pour déterminer une première répartition (23) de temps de vol de lumière de photons détectés et enregistrer la première répartition (23) des temps de vol de lumière dans une première zone de mémoire (25) de l'unité de mémoire (24), dans lequel l'unité de traitement de données (22) est réalisée pour associer la première répartition (23) de temps de vol de lumière à des intervalles de temps d'une première pluralité d'intervalles de temps,
dans lequel l'unité de traitement de données (24) présente un filtre passe-bas (28) et/ou dans lequel un filtre passe-bas (28) est implémenté dans l'unité de traitement de données (22), dans lequel l'unité de traitement de données (22) est réalisée, dans une étape de réduction, pour réduire ou supprimer des fractions de fréquence de la première répartition (23) des temps de vol de lumière au-dessus d'une fréquence limite prédéfinie au moyen du filtre passe-bas (28) de sorte qu'une deuxième répartition (29) de temps de vol de lumière est générée,
**caractérisé en ce que**
l'unité de traitement de données (22) est réalisée pour associer la deuxième répartition (29) de temps de vol de lumière à des intervalles de temps d'une deuxième pluralité d'intervalles de temps, et **en ce qu'**une fréquence de coupure du filtre passe-bas (28) est inférieure ou égale à la moitié de l'inverse d'une largeur d'intervalle la plus petite (39) de la deuxième pluralité d'intervalles de temps.

12. Dispositif (100) selon la revendication 11, **caractérisé en ce que** l'unité de traitement de données (22) est réalisée pour enregistrer la deuxième répartition (29) de temps de vol de lumière dans une deuxième zone de mémoire (26), dans lequel, de manière préférée, la deuxième zone de mémoire (26) est plus petite que la première zone de mémoire (25).

13. Dispositif (100) selon la revendication 11 ou 12, **caractérisé en ce que** le filtre passe-bas (28) est un filtre polyphasique et/ou **en ce que** le filtre passe-bas (28) réalise un découpage polyphasique de la première répartition (23) des temps de vol de lumière.

14. Dispositif (100) selon l'une des revendications 11 à 13, **caractérisé en ce que** plusieurs émetteurs (12) et/ou plusieurs récepteurs (14) sont prévus, et **en ce que** plusieurs premières répartitions (23) de temps de vol de lumière sont déterminées et **en ce que**, dans l'étape de réduction, des fractions de fréquence des plusieurs premières répartitions (23) des temps de vol de lumière au-dessus d'au moins une fréquence limite prédéfinie sont réduites ou supprimées au moyen d'au moins un filtre passe-bas (28) et/ou **en ce que** ces plusieurs émetteurs (12) et/ou plusieurs récepteurs (14) sont disposés dans un réseau d'émetteurs (10) et/ou un réseau de récepteurs (11), dans lequel, de manière préférée, grâce à une commande sélective de sous-ensembles des plusieurs émetteurs (12) et/ou plusieurs récepteurs (14), une zone de détection est balayée, de préférence séquentiellement.

15. Produit de programme informatique qui comprend un support de stockage lisible par ordinateur sur lequel un programme est enregistré, lequel permet à un ordinateur, après avoir été chargé dans la mémoire de l'ordinateur, de mettre en œuvre un procédé selon l'une des revendications 1 à 10, le cas échéant en interaction avec un dispositif (100) selon l'une des revendications 11 à 14.
